# EUROPEAN PATENT APPLICATION

(11) **EP 4 648 487 A1**
(43) Date of publication of application: **12.11.2025**
(21) Application number: 24738693.1
(22) Date of filing: 03.01.2024
(51) Int. Cl.: H04W 48/20, H04W 60/00, H04W 84/12, H04W 92/02

(54) **NON-3GPP AN NODE SELECTION METHOD**

(30) Priority: 06.01.2023 US 202363437610 P; 05.04.2023 US 202363457148 P
(71) Applicant: LG Electronics Inc., Yeongdeungpo-gu Seoul 07336 (KR)
(72) Inventor: YOUN, Myungjune, Seoul 06772 (KR); KIM, Laeyoung, Seoul 06772 (KR)
(74) Representative: Frenkel, Matthias Alexander
(86) International application number: PCT/KR2024/000090
(87) International publication number: WO 2024/147623

(57) **Abstract**

Provided in one embodiment of the present disclosure is a method by which a NAS layer of a UE performs communication. The method comprises the steps of: transmitting a first registration request message to a specific non-3GPP access network (AN) node through a non-3GPP access, the first registration request message including Requested NSSAI; receiving a registration reject message from an AMF on the basis that the specific non-3GPP AN node does not support the Requested NSSAI, the registration reject message including target non-3GPP AN node information; and transmitting a second registration request message, the second registration request message including the Requested NSSAI on the basis of the performance of the step of using the target non-3GPP AN node information so as to transmit the second registration request message.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

There is a problem where, in certain situations, terminal registration requests are repeatedly rejected.

### DESCLOSURE

### TECHNICAL SOLUTION

Using the information included in the registration rejection, the terminal performs a registration request via a message containing the same Requested NSSAI as the previous registration request.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a block diagram of a next generation cellular network.
FIG. 5 illustrates an example 5G system structure to which an implementation of the present specification may be applied.
FIGS. 6 and 7 show an example of a registration procedure to which implementations of the present disclosure is applied.
FIG. 8a, FIG. 8b and FIG. 8c show registration via untrusted non-3GPP access according to embodiments of the present specification.
FIG. 9a, FIG. 9b, FIG. 9c and FIG. 9d shows registration via trusted non-3GPP access according to embodiments of the present specification.
FIG. 10 shows the procedure of the UE according to disclosure of the present specification.
FIG. 11 shows the procedure of the AMF according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

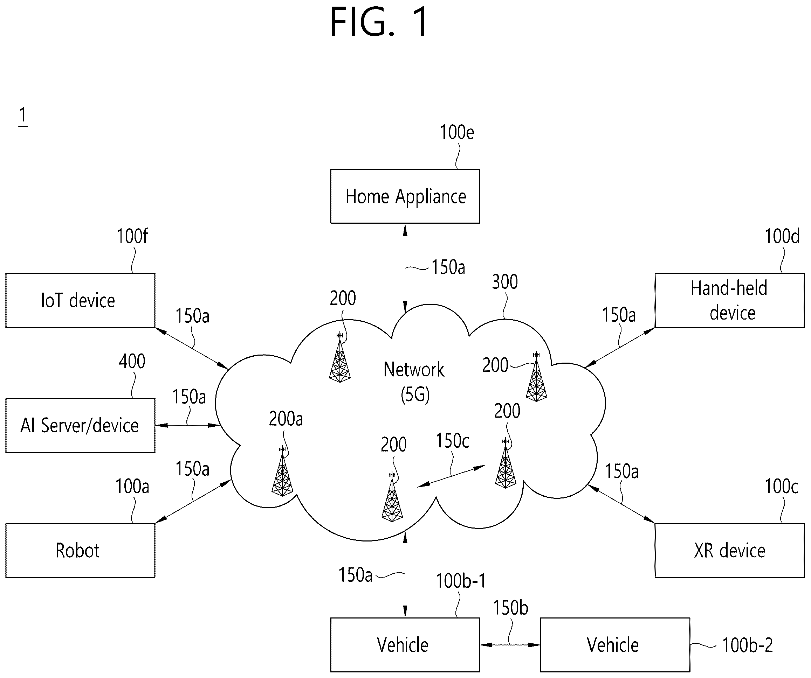

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

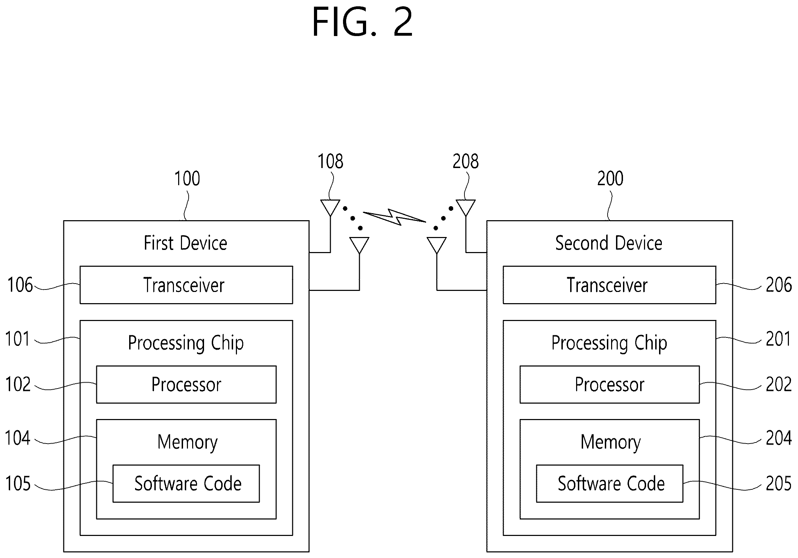

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

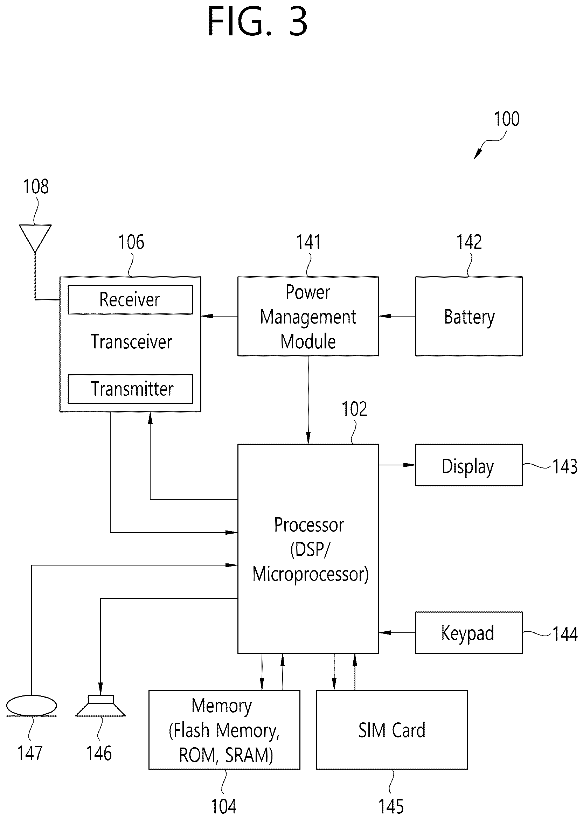

**FIG. 3** **shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

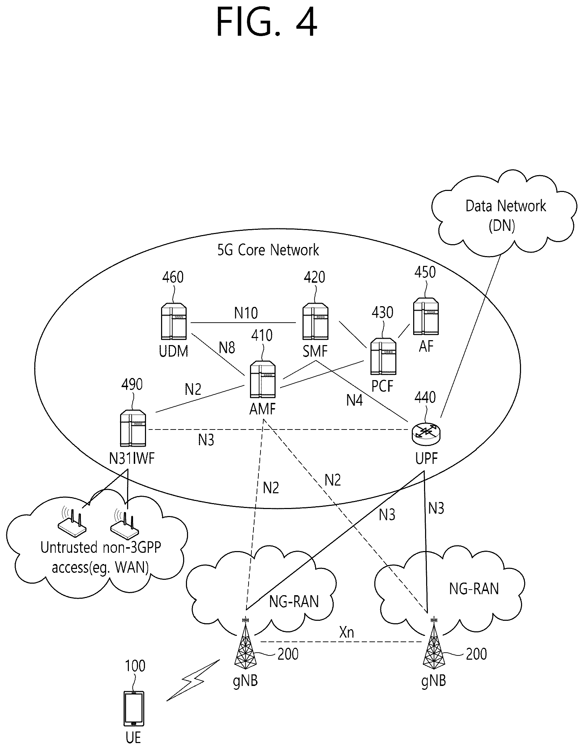

**FIG. 4** **is a block diagram of a next generation cellular network.**

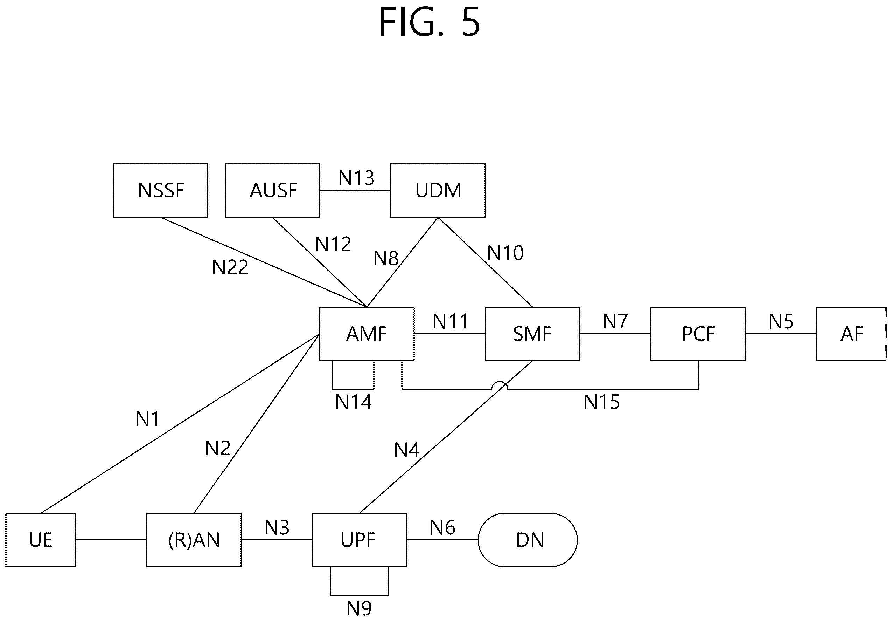

The 5G Core (5GC) may include a variety of components, some of which are shown in FIG. 5, such as the Access and Mobility Management Function (AMF) (410), the Session Management Function (SMF) (420), the Policy Control Function (PCF) (430), the User Plane Function (UPF) (440), the Application Function (AF) (450), the UDF (UDF) (450), and the UDF (UDF) (450): Policy Control Function (PCF) (430), User Plane Function (UPF) (440), Application Function (AF) (450), Unified Data Management (UDM) (460), and Non-3rd Generation Partnership Project (3GPP) Inter Working Function (N3IWF) (490).

The UE 100 is connected to the data network via the UPF 440 through a next generation radio access network (NG-RAN) including the gNB 20.

The UE 100 may also be provided data services via untrusted non-3GPP access, such as a wireless local area network (WLAN). To connect said non-3GPP access to the core network, a N3IWF 490 may be deployed.

The illustrated N3IWF 490 performs the function of managing the interworking between the non-3GPP access and the 5G system. When the UE 100 is associated with a non-3GPP access (e.g., WiFi, also referred to as IEEE 801.11), the UE 100 may be associated with the 5G system via the N3IWF 490. The N3IWF 490 communicates with the AMF 410 for control signaling and with the UPF 440 via the N3 interface for data transfer.

The illustrated AMF 410 may manage access and mobility in a 5G system. The AMF 410 may perform functions to manage Non-Access Stratum (NAS) security. The AMF 410 may perform functions to handle mobility in an idle state.

The UPF 440 shown is a type of gateway through which user data is transmitted and received. The UPF node 440 may perform all or part of the user plane functions of the Serving Gateway (S-GW) and Packet Data Network Gateway (P-GW) of fourth generation mobile communications.

The UPF 440 acts as a demarcation point between the next generation radio access network (NG-RAN) and the core network, and is the element that maintains the data path between the gNB 20 and the SMF 420. Additionally, the UPF 440 acts as a mobility anchor point when the UE 100 moves across the area served by the gNB 20. The UPF 440 may perform functions to handle PDUs. For mobility within the NG-RAN (Next Generation-Radio Access Network as defined in 3GPP Release-15 and later), the UPF may route packets. The UPF 440 may also function as an anchor point for mobility with other 3GPP networks (RANs defined prior to 3GPP Release-15, e.g., UTRAN, E-UTRAN (Evolved-UMTS (Universal Mobile Telecommunications System) Terrestrial Radio Access Network), or GERAN (Global System for Mobile Communication (GSM)/EDGE (Enhanced Data rates for Global Evolution) Radio Access Network). The UPF 440 may correspond to a termination point of the data interface to the data network.

The PCF 430 shown is a node that controls the operator's policies.

The AF 450 shown is a server for providing multiple services to the UE 100.

The UDM 460 shown is a type of server that manages subscriber information, such as a home subscriber server (HSS) in fourth generation mobile communications. The UDM 460 stores and manages subscriber information in a unified data repository (UDR).

The SMF 420 shown may perform the function of assigning an Internet Protocol (IP) address of a UE. The SMF 420 may also control protocol data unit (PDU) sessions.

As a point of reference, the drawing symbols for AMF 410, SMF 420, PCF 430, UPF 440, AF 450, UDM 460, N3IWF 490, gNB 20, or UE 100 may be omitted herein.

Fifth generation mobile communications supports multiple numerologies or subcarrier spacings (SCS) to support various 5G services. For example, an SCS of 15 kHz supports wide area coverage in traditional cellular bands; an SCS of 30 kHz/60 kHz supports dense-urban, lower latency, and wider carrier bandwidth; and an SCS of 60 kHz or higher supports bandwidths greater than 24.25 GHz to overcome phase noise.

**FIG. 5** **illustrates an example 5G system structure to which an implementation of the present specification may be applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

### <Registration procedure>

A registration procedure is described. Section 4.2.2.2 of 3GPP TS 23.502 V16.3.0 (2019-12) can be referred.

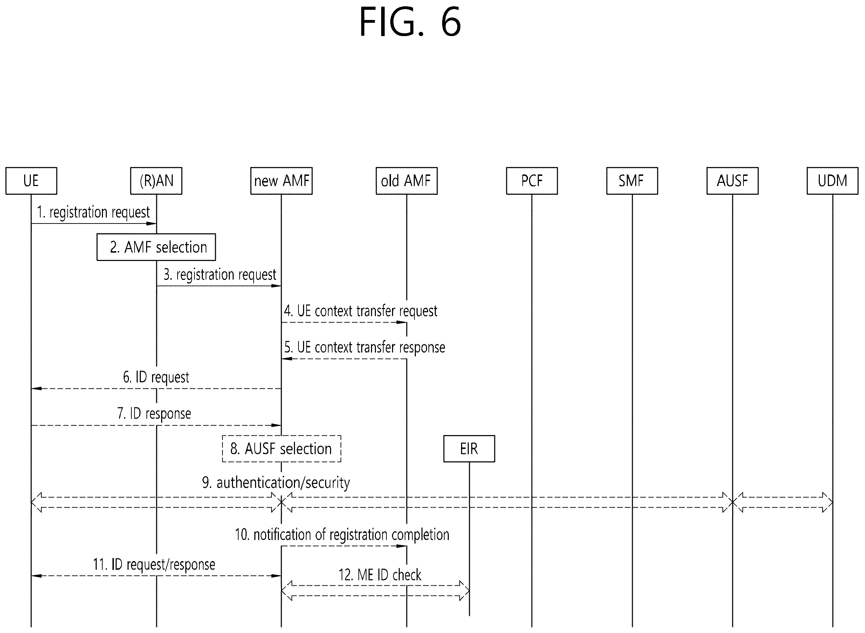

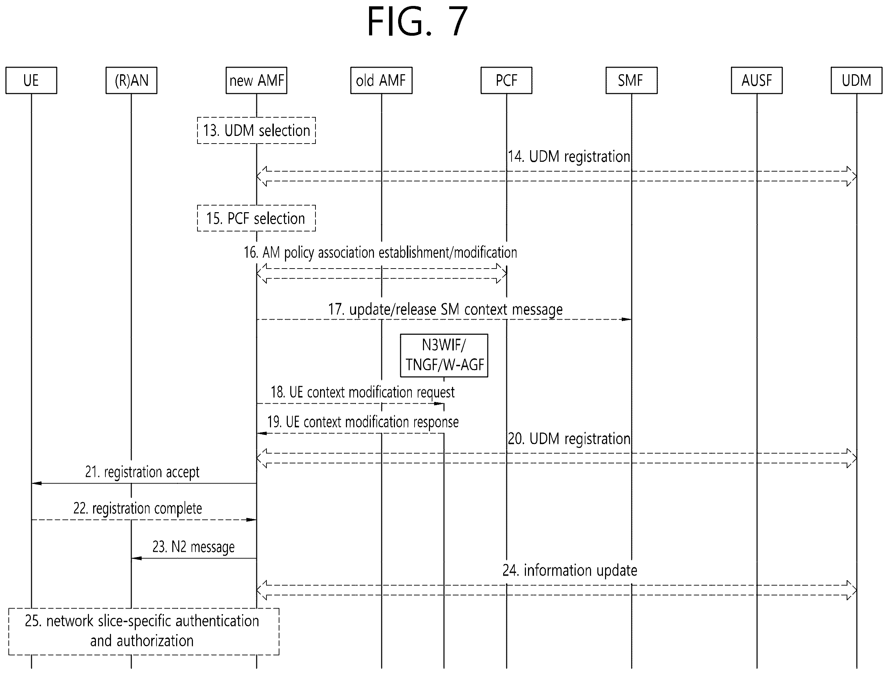

**FIGS. 6** **and** **7** **show an example of a registration procedure to which implementations of the present disclosure is applied.**

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 6 and 7 applies on all these registration procedures, but the periodic registration update need not include all parameters that are used in other registration cases.

The general registration procedure in FIGS. 6 and 7 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 6 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF sending the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 7, which follow the procedures of FIG. 6, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may send a UE Context Modification Request to the N3IWF/TNGF/W-AGF.

(19) Step 19: The N3IWF/TNGF/W-AGF may send a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each S-NSSAI of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was assigned.

(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN.

(24) Step 24: The new AMF may perform information update towards the UDM.

(25) Step 25: The UE may execute Network Slice-Specific Authentication and Authorization procedure.

### <Network slicing>

Describes network slicing. See section 4.6 of 3GPP TS 24.501 V16.4.1.

The 5GS supports network slicing. Within a PLMN or SNPN, a network slice is identified by an S-NSSAI, which is comprised of a slice/service type (SST) and a slice differentiator (SD). Inclusion of an SD in an S-NSSAI is optional. A set of one or more S-NSSAIs is called the NSSAI. The following NSSAIs may be defined:
a) configured NSSAI;
b) requested NSSAI;
c) allowed NSSAI;
d) subscribed S-NSSAIs; and
e) pending NSSAI.

The following NSSAIs may be defined:
a) rejected NSSAI for the current PLMN or SNPN;
b) rejected NSSAI for the current registration area;
c) rejected NSSAI for the failed or revoked NSSAA; and

In case of a PLMN, a serving PLMN may configure a UE with the configured NSSAI per PLMN. In addition, the HPLMN may configure a UE with a single default configured NSSAI and consider the default configured NSSAI as valid in a PLMN for which the UE has neither a configured NSSAI nor an allowed NSSAI. For SNPN, SNPN may set the UE to set the SNPN applicable to the SNPN.

The allowed NSSAI and the rejected NSSAI for the current registration area are managed per access type independently, i.e. 3GPP access or non-3GPP access, and is applicable for the registration area. If the registration area contains TAIs belonging to different PLMNs, which are equivalent PLMNs, the allowed NSSAI and the rejected NSSAI for the current registration area are applicable to these PLMNs in this registration area.

The allowed NSSAI that is associated with a registration area containing TAIs belonging to different PLMNs, which are equivalent PLMNs, can be used to form the requested NSSAI for any of the equivalent PLMNs when the UE is outside of the registration area where the allowed NSSAI was received.

When the network slice-specific authentication and authorization procedure is to be initiated for one or more S-NSSAIs in the requested NSSAI, these S-NSSAI(s) will be included in the pending NSSAI. When the network slice-specific authentication and authorization procedure is completed for an NSSAI that has been in the pending NSSAI, the S-NSSAI will be moved to the allowed NSSAI or rejected NSSAI depending on the outcome of the procedure, and are notified to the UE. The pending NSSAI is managed regardless of access type i.e. the pending NSSAI is applicable to both 3GPP access and non-3GPP access for the current PLMN even if sent over only one of the accesses.

The rejected NSSAI for the current PLMN or SNPN is applicable for the whole registered PLMN or SNPN. The AMF shall only send a rejected NSSAI for the current PLMN when the registration area consists of TAIs that only belong to the registered PLMN. If the UE receives a rejected NSSAI for the current PLMN, and the registration area also contains TAIs belonging to different PLMNs, the UE shall treat the received rejected NSSAI for the current PLMN as applicable to the whole registered PLMN.

The rejected NSSAI for the failed or revoked NSSAA includes one or more S-NSSAIs that have failed the network slice-specific authentication and authorization or for which the authorization have been revoked, and are applicable for the whole registered PLMN or SNPN.

Describes NSSAI storage. See section 4.6.2.2 of 3GPP TS 24.501 V16.4.1.

In general, Configured NSSAI is the subscribed NSSAI of the UE when the UE is connected to the HPLMN, and remains the same unless the subscriber information of the UE changes. However, an existing S-NSSAI may be created as Configured NSSAI due to a change in subscriber information, or a specific S-NSSAI may be removed. After that, the AMF may inform the UE of the updated S-NSSAI of the current connected network.

In addition, the UE may store and retain the Configured NSSAI for the network that the UE has visited in the non-volatile memory. Therefore, when the UE selects a new VPLMN, the Configured NSSAI information of the previously visited network may exist. Therefore, when performing PLMN selection, the UE may have the Configured NSSAI information of the PLMN that the UE has selected.

In addition, if there is an SLA (service level agreement) between the VPLMN and the HPLMN that the UE can access, the UE may know which HPLMN's S-NSSAI the VPLMN has.

If available, the Configured NSSAI is stored in the non-volatile memory of the UE. The Allowed NSSAI is stored in the non-volatile memory of the UE.

Each of the configured NSSAI stored in the UE is a set composed of at most 16 S-NSSAIs. Each of the allowed NSSAI stored in the UE is a set composed of at most 8 S-NSSAIs and is associated with a PLMN identity or SNPN identity, an access type. Each of the configured NSSAI except the default configured NSSAI, and the rejected NSSAI is associated with a PLMN identity or SNPN identity. The S-NSSAI(s) in the rejected NSSAI for the current registration area are further associated with one or more tracking areas where the rejected S-NSSAI(s) is not available. The S-NSSAI(s) in the rejected NSSAI for the current PLMN or SNPN shall be considered rejected for the current PLMN or SNPN regardless of the access type. The S-NSSAI(s) in the rejected NSSAI for the failed or revoked NSSAA shall be considered rejected for the current PLMN or SNPN regardless of the access type. There shall be no duplicated PLMN identities or SNPN identities associated with each of the list of configured NSSAI(s), pending NSSAI(s), rejected NSSAI(s) for the current PLMN or SNPN, rejected NSSAI(s) for the current registration area.

The UE stores NSSAIs as follows:
a) The configured NSSAI shall be stored until a new configured NSSAI is received for a given PLMN or SNPN. The network may provide to the UE the mapped S-NSSAI(s) for the new configured NSSAI which shall also be stored in the UE. When the UE is provisioned with a new configured NSSAI for a PLMN or SNPN, the UE shall:
   1) replace any stored configured NSSAI for this PLMN or SNPN with the new configured NSSAI for this PLMN or SNPN;
   2) delete any stored mapped S-NSSAI(s) for the configured NSSAI and, if available, store the mapped S-NSSAI(s) for the new configured NSSAI;
   3) delete any stored allowed NSSAI for this PLMN or SNPN and, if available, the stored mapped S-NSSAI(s) for the allowed NSSAI, if the UE received the new configured NSSAI for this PLMN or SNPN and the Configuration update indication IE with the Registration requested bit set to "registration requested", in the same CONFIGURATION UPDATE COMMAND message but without any new allowed NSSAI for this PLMN or SNPN included;
   4) Delete rejected NSSAIs for the current PLMN or SNPN stored, rejected NSSAIs for the current registration area, and rejected NSSAIs for NSSAI and NSSAA failure or revoke.

If the UE receives an S-NSSAI associated with a PLMN ID from the network during the PDN connection establishment procedure in EPS, the UE may store the received S-NSSAI in the configured NSSAI for the PLMN identified by the PLMN ID associated with the S-NSSAI, if not already included in the configured NSSAI;

The UE may continue storing a received configured NSSAI for a PLMN and associated mapped S-NSSAI(s), if available, when the UE registers in another PLMN.

b) The allowed NSSAI is stored until a new allowed NSSAI is received for the given PLMN or SNPN. The network may also provide the UE with a mapped S-NSSAI for the new allowed NSSAI to be stored in the UE. When a new allowed NSSAI is received for a PLMN or SNPN, the UE does the following:
1) replace any stored allowed NSSAI for this PLMN or SNPN with the new allowed NSSAI for this PLMN or SNPN;
2) delete any stored mapped S-NSSAI(s) for the allowed NSSAI, if available, store the mapped S-NSSAI(s) for the new allowed NSSAI;
3) remove the S-NSSAI (if any) included in the newly allowed NSSAI for the current PLMN or SNPN from the stored rejected NSSAI;
4) remove one or more S-NSSAIs (if any) included in the newly allowed NSSAI for the current PLMN or SNPN from the stored pending NSSAIs.

When the UE receives a Configuration Update Command message with the Registration Request bit in the Configuration Update Instruction IE set to "Registration Request" and no other parameters, the UE deletes the allowed NSSAIs stored for this PLMN or SNPN and, if available, deletes the mapped S-NSSAIs stored for the allowed NSSAIs.

c) When the UE receives the S-NSSAI(s) included in the rejected NSSAI in the REGISTRATION ACCEPT message, the REGISTRATION REJECT message, the DEREGISTRATION REQUEST message or in the CONFIGURATION UPDATE COMMAND message, the UE shall:
1) store the S-NSSAI(s) into the rejected NSSAI based on the associated rejection cause(s);
2) remove from the stored allowed NSSAI for the current PLMN or SNPN, if any, included in the:
   i) rejected NSSAI for the current PLMN or SNPN, for each and every access type;
   ii) rejected NSSAI for the current registration area, associated with the same access type; and
   iii) rejected NSSAI for each and every connection type, either NSSAA failure or withdrawal;
3) remove from the stored pending NSSAI for the current PLMN or SNPN, if any, included in the:
   i) rejected NSSAI for the current PLMN or SNPN, for each and every access type;
   ii) rejected NSSAI for the current registration area, associated with the same access type; or
   iii) Rejected NSSAI for each and every connection type, either NSSAA failure or withdrawal;

When the UE:
1) deregisters from the current PLMN using explicit signaling or enters SGMM-DEREGISTERED state for the current PLMN; or
2) successfully registers with a new PLMN;
3) enters state SGMM-DEREGISTERED following an unsuccessful registration with a new PLMN; or
   and the UE is not registered with the current PLMN or SNPN over another access, the rejected NSSAI for the current PLMN shall be deleted.

When the UE:
1) deregisters over an access type;
2) successfully registers in a new registration area over an access type; or
3) enters state SGMM-DEREGISTERED or SGMM-REGISTERED following an unsuccessful registration in a new registration area over an access type,
   the rejected NSSAI for the current registration area corresponding to the access type shall be deleted;

d) If the UE receives one or more S-NSSAIs included in the pending NSSAI in the Registration Accept message, the UE stores one or more S-NSSAIs for the pending NSSAI.

When the UE:
1) deregisters with the current PLMN using explicit signalling or enters state SGMM-DEREGISTERED for the current PLMN;
2) successfully registers with a new PLMN;
3) enters state SGMM-DEREGISTERED following an unsuccessful registration with a new PLMN;
4) successful complete the attach or tracking area update procedure in S1 mode; or
5) initiates an attach or tracking area update procedure in S1 mode and receives an attach reject message or tracking area update reject message;
   and the UE is not registered with the current PLMN over another access, the pending NSSAI for the current PLMN shall be deleted.

e) For PLMN, if the UE receives a Network Slicing Indication IE with Network Slicing Subscription Change Indication set to "Network slicing subscription changed" in a Registration Accept message or a Configuration Update Command message, the UE deletes the network slicing information for each PLMN (except the current PLMN) where it stores network slicing information. The UE does not delete the default Configured NSSAI. Additionally, the UE updates the network slicing information for the current PLMN as mentioned in a), b), c) and e) above (if received).

The pending NSSAI is the NSSAI provided by the serving PLMN during the registration procedure, and indicates the S-NSSAI for which the network slice-specific authentication and authorization procedure is pending.

### <non-3GPP access>

Non-3GPP access networks include Untrusted Non-3GPP access networks, Trusted Non-3GPP access networks and W-5GAN.

The UE shall enter the RM-DEREGISTERED state for the UE in non-3GPP access and the AMF shall enter the RM-DEREGISTERED state as follows:
- In the UE and the AMF after performing the explicit deregistration procedure,
- In the AMF, after the network non-3GPP implicit deregistration timer expires.
- In the UE, after the UE non-3GPP deregistration timer expires.

A UE registered via non-3GPP access starts the UE non-3GPP deregistration timer according to the value received from the AMF during the registration procedure whenever it enters the CM-IDLE state for non-3GPP access.

Over non-3GPP access, the AMF starts the network non-3GPP implicit deregistration timer. The network non-3GPP implicit deregistration timer is started with a value greater than the non-3GPP deregistration timer of the UE whenever the CM state for a UE registered via non-3GPP access changes to CM-IDLE for non-3GPP access.

For a UE registered via non-3GPP access, the UE shall not perform the registration procedure due to a change in the point of attachment (e.g., a change in WLAN AP).

A UE registered via non-3GPP access may trigger a mobility registration update procedure via the new Non-3GPP AN node (e.g., N3IWF or TNGF) to switch traffic from the old Non-3GPP access to the new Non-3GPP access.

During the registration procedure, the AMF may determine whether the serving N3IWF/TNGF is appropriate based on the slices supported by the N3IWF/TNGF.

### 1. N3IWF Selection

When the UE supports connectivity with N3IWF but does not support connectivity with ePDG, the UE performs the procedure for selecting an N3IWF.

When the UE supports connectivity with N3IWF, as well as with ePDG, the UE shall perform the procedure for selecting either an N3IWF or an ePDG, e.g. for selecting a non-3GPP access node.

In both cases above the UE can be configured by the HPLMN with the same information that includes:
1) ePDG identifier configuration: It contains the FQDN or IP address of the ePDG in the HPLMN. This is used only when the UE supports connectivity with ePDG and attempts to select an ePDG. It is ignored in all other cases.
2) N3IWF identifier configuration: It contains the FQDN or IP address of the N3IWF in the HPLMN.
3) Extended Home N3IWF identifier configuration: It contains one or multiple tuples of FQDN/IP address of the N3IWF in the HPLMN and the S-NSSAIs supported by this N3IWF.
4) Non-3GPP access node selection information: It contains a prioritized list of PLMNs and for each PLMN it includes (i) a "Preference" parameter which indicates if ePDG or N3IWF is preferred in this PLMN and (ii) an FQDN parameter which indicates if the Tracking/Location Area Identity FQDN or the Operator Identifier FQDN should be used when discovering the address of an ePDG or N3IWF in this PLMN. The list of PLMNs shall include the HPLMN and shall include an "any PLMN" entry, which matches any PLMN the UE is connected to except the HPLMN.
5) Slice-specific N3IWF prefix configuration: It contains one or multiple tuples consisting of:
   - List of supported S-NSSAIs;
   - Prefix for the Prefixed N3IWF OI or TA FQDNs.

NOTE 1: Extended Home N3IWF identifier configuration and Slice-specific N3IWF prefix configuration are assumed to be provided to the UE as part of ANDSP.

The ePDG identifier configuration, the N3IWF identifier configuration, the Extended Home N3IWF identifier configuration and the Slice-specific N3IWF Prefix Configuration are optional parameters, while the Non-3GPP access node selection information is required and shall include at least the HPLMN and the "any PLMN" entry.

If the ePDG identifier configuration is configured in the UE, then, when the UE decides to select an ePDG in the HPLMN (according to the procedure in clause 6.3.6.3), the UE shall use the ePDG identifier configuration to find the IP address of the ePDG in the HPLMN and shall ignore the FQDN parameter of the HPLMN in the Non-3GPP access node selection information.

If the N3IWF identifier configuration or the Extended Home N3IWF identifier configuration is configured in the UE, then, when the UE decides to select an N3IWF in the HPLMN, the UE shall use the Extended Home N3IWF identifier configuration, if available, and otherwise the N3IWF identifier configuration to find the IP address of the N3IWF in the HPLMN and shall ignore the FQDN parameter of the HPLMN in the Non-3GPP access node selection information.

The HPLMN's PCF takes the UE's subscribed S-NSSAIs into account when providing Extended Home N3IWF identifier configuration and/or Slice-specific N3IWF Prefix Configuration to the UE.

If a UE does not support the Extended Home N3IWF identifier configuration and the Slice-specific N3IWF Prefix Configuration, then the HPLMN provides to the UE the Non-3GPP access node selection information and the N3IWF identifier configuration by taking into account the UE's subscribed S-NSSAIs.

NOTE 2: If the HPLMN deploys multiple N3IWFs with different TAs which support different S-NSSAIs, then the HPLMN can configure a UE with N3IWF identifier configuration so that the UE selects an N3IWF that supports the UE's subscribed S-NSSAIs.

The UE can be configured by the VPLMN with the following information applicable for the V-PLMN:

Slice-specific N3IWF prefix configuration: It contains one or multiple tuples consisting of:
- List of supported S-NSSAIs;
- Prefix for the Prefixed N3IWF OI or TA FQDNs.

To enable the V-PCF to provide the UE with Slice-specific N3IWF prefix configuration, the AMF provides the V-PCF with the Configured NSSAI for the serving PLMN during the UE Policy Association Establishment/Modification procedure.

NOTE 3: In non-roaming cases, the UE PCF already receives the subscribed NSSAI from the UDR. Therefore, there is no need for the AMF to provide the Configured NSSAI to the PCF in the non-roaming case.

NOTE 4: PCF (V-PCF in the roaming case) is assumed to be locally configured with information about the slices supported by the different N3IWFs in the serving PLMN.

During the registration procedure the AMF may determine if the N3IWF selected by the UE is suitable for the S-NSSAI(s) requested by the UE considering the UE subscription. If the AMF determines that a different N3IWF should be selected, the AMF:
- may, if the UE supports slice-based N3IWF selection, trigger the UE Policy Association Establishment or UE Policy Association Update procedure to provide the UE with updated N3IWF selection information; when the AMF is informed that the update of N3IWF selection information is completed, the AMF may release UE Policy Association if it is not needed before proceeding to the Registration Reject;
- shall send a Registration Reject message to the UE. The AMF may include target N3IWF information (FQDN and/or IP address) in the Registration Reject so that the UE can, if supported by the UE, use the target N3IWF information to select the N3IWF to register to 5GC. The target N3IWF information only applies to the one N3IWF selection performed by the UE just after receiving the Registration Reject.

The AMF may determine the N3IWF based on the list of supported TAs and the corresponding list of supported slices for each TA obtained.

### 2. Trusted Non-3GPP Access Network selection

It is specified that: how a UE, which wants to establish connectivity via trusted non-3GPP access and is not operating in SNPN access mode, selects a PLMN and a trusted non-3GPP access network (TNAN) to connect to.

As an example, a UE may decide to use trusted non-3GPP access for connecting to 5GC in a specific PLMN based on:
- the UE implementation-specific criteria; or
- the UE configuration, e.g. the UE may be configured to try first the trusted non-3GPP access procedures; or
- the UE capabilities, e.g. the UE may support only the trusted non-3GPP access procedures; or
- the advertised capabilities of the discovered non-3GPP access networks, e.g. one or more available non-3GPP access networks advertise support of trusted connectivity to 5GC in a specific PLMN.

In deployment scenario, the UE has discovered five non-3GPP access networks, which are WLAN access networks. These WLANs advertise information about the PLMNs they interwork with, e.g. by using the ANQP protocol. Each WLAN may support "S2a connectivity" and/or "5G connectivity" to one or more PLMNs. Before establishing connectivity via trusted non-3GPP access, the UE needs to select (a) a PLMN, (b) a non-3GPP access network that provide trusted connectivity this this PLMN, and (c) a connectivity type, i.e. either "5G connectivity" or "S2a connectivity".

Each non-3GPP access network may advertise one or more of the following PLMN lists:
1) A PLMN List-1, which includes PLMNs with which "AAA connectivity" is supported. A non-3GPP access network supports "AAA connectivity" with a PLMN when it deploys an AAA function that can connect with a 3GPP AAA Server/Proxy in this PLMN, via an STa interface (trusted WLAN to EPC), or via an SWa interface (untrusted WLAN to EPC).
2) A PLMN List-2, which includes PLMNs with which "S2a connectivity" is supported. A non-3GPP access network supports "S2a connectivity" with a PLMN when it deploys a TWAG function that can connect with a PGW in this PLMN, via an S2a interface.
3) A PLMN List-3, which includes PLMNs with which "5G connectivity" is supported. A non-3GPP access network supports "5G connectivity" with a PLMN when it deploys a TNGF function that can connect with an AMF function and an UPF function in this PLMN via N2 and N3 interfaces, respectively.

When the UE wants to discover the PLMN List(s) supported by a non-3GPP access network and the non-3GPP access network supports ANQP, the UE shall send an ANQP query to the non-3GPP access network requesting "3GPP Cellular Network" information. If the non-3GPP access network supports interworking with one or more PLMNs, the response received by the UE includes a "3GPP Cellular Network" information element containing one or more of the above three PLMN Lists. The PLMN List-1 and the PLMN List-2 indicate support of interworking with EPC in one or more PLMNs. The PLMN List-3 is a list used to indicate support of interworking with 5GC in one or more PLMNs.

The UE determines if a non-3GPP access network supports "trusted connectivity" to a specific PLMN by receiving the PLMN List-2 and the PLMN List-3 advertised by this access network. If this PLMN is not included in any of these lists, then the non-3GPP access network can only support connectivity to an ePDG or N3IWF in the PLMN (i.e. "untrusted connectivity").

The problem is how to select an N3IWF that supports the S-NSSAI(s) needed by the UE.

Selection of N3IWF that supports the S-NSSAIs needed by the UE is enabled based on extended ANDSP configuration and NAS-based redirection (using Registration Reject).

Selection of a TNGF that supports the S-NSSAIs needed by the UE is enabled based on:
- UE based solutions where UE(s) may use WLAN SP policy to select a SSID allowing to access to a TNGF that supports the slices the UE are willing to use and then leverage this information to try registering onto 5GC via TNGF.
- The WLAN SP policy is extended with the indication of the set of slices associated to a SSID.
- The AMF may determine the UE used a wrong SSID based on information received over N2 from the TNGF.
- The AMF may trigger the UE Policy Association Establishment procedure to provide the UE with updated WLANSP if the selected SSID (TNGF) does not support the slices requested by UE. The AMF requests the PCF to receive a notification when the PCF has completed the WLANSP update; once the AMF has received this notification from the PCF, the AMF can issue a registration reject.
- AMF may provide the target TNAN information (e.g. such as SSID) associated with the Requested NSSAI to UE within Registration Reject message.
- The UE selects an appropriate SSID associated with the Requested NSSAI and build the realm of NAI.

During the registration procedure, the AMF may determine if the N3IWF selected by the UE is suitable for the S-NSSAI(s) requested by the UE considering the UE subscription. If the AMF determines that a different N3IWF should be selected, the AMF:
- may, if the UE supports slice-based N3IWF selection, trigger the UE Policy Association Establishment or UE Policy Association Update procedure to provide the UE with updated N3IWF selection information; when the AMF is informed that the update of N3IWF selection information is completed, the AMF may release UE Policy Association if it is not needed before proceeding to the Registration Reject;
- may have to send a Registration Reject message to the UE. The AMF may include target N3IWF information (FQDN and/or IP address) in the Registration Reject so that the UE can, if supported by the UE, use the target N3IWF information to select the N3IWF to register to 5GC. The target N3IWF information only applies to the one N3IWF selection performed by the UE just after receiving the Registration Reject.

If AMF includes N3IWF information in Registration Reject, the terminal may select N3IWF using N3IWF information when sending the next registration request.

N3IWF information is N3IWF information that AMF notifies to the terminal that is suitable for the terminal based on the Requested NSSAI requested by the terminal.

If the terminal performs re-registration and creates Requested NSSAI according to the previous operation (e.g., configures Requested NSSAI based on Configured NSSAI and Allowed NSSAI), the terminal may request a new S-NSSAI by inserting it into Requested NSSAI.

In this case, the N3IWF selected by the terminal based on the N3IWF information notified by AMF may not support the Requested S-NSSAI included in the registration request.

Since the N3IWF information provided by AMF is based on the NSSAI previously included in the registration request, the N3IWF selected based on this may not support the new NSSAI.

Therefore, AMF may reject the registration of the terminal again. This rejection may occur repeatedly. For example, the "loop of registration request' phenomenon may occur. This problem needs to be resolved.

In this regard, the SPEC related to the registration process contain the following contents as shown in Table 3.

**[Table 3]**

| |
|---|
| Steps 15 to 19 correspond to the case where the AMF has detected that the N3IWF used by the UE is not compatible with the subset of the requested NSSAI that is allowed by the subscribed S-NSSAI(s).15. If the UE Registration Request contains an indication that the UE supports N3IWF selection based on the slices the UE wishes to use over untrusted non-3GPP access, the AMF may trigger the UE PCF to update the N3IWF selection related policies on the UE (contained in ANDSP. |
| NOTE 4: The UE is assumed to inform PCF whether the UE supports Extended Home N3IWF identifier configuration and Slice-specific N3IWF prefix configuration as part of the UE policy update procedure. Details will be specified by CT1. |
| 16. The PCF updates the UE policy per procedure in figure 4.2.4.3-1. |
| 17. The AMF sends via the N3IWF a UE Registration Reject indicating that the UE selected N3IWF was not appropriate for the requested slices that the UE is allowed to access to. The AMF optionally may provide target N3IWF information (FQDN and/or IP address) to the UE within the Registration Reject message. |
| Editor's note: Whether to prevent to prevent the UE from loop of registration request and AMF reject for example in cqse of error in policy update, in UE policy provided, etc is FFS. |
| NOTE 5: The AMF may determine a target N3IWF that supports the subset of the requested NSSAI that is allowed by the subscribed S-NSSAI(s) based on the list of supported TAs and the corresponding list of supported slices for each TA obtained in N2 interface management procedures as specified in TS 38.413 [10]. |
| Editor's note: Whether there is a need for the PCF to notify AMF about the completion of policy delivery is FFS. |
| 18. If supported by the UE and if the UE received target N3IWF information in step 17, the UE connects to the target N3IWF, otherwise the UE may perform N3IWF selection again using the updated N3IWF selection information received in step 16. The UE uses the target N3IWF information in the Registration Reject only for the N3IWF selection directly following the rejected registration and UE shall not store for future use. |

In this specification, methods for solving the above-mentioned problems may be proposed. The methods described below may be performed or used in combination or complementary manner. The descriptions written based on N3IWF in this specification may be similarly applied to TNGF selection.

The embodiments described below are not optional, and the embodiments may be performed in combination with each other.

### I. First embodiment

### (1) General

The following problems may arise:
- It is described that the PCF notifies the AMF that UE policy update is completed and based on that the AMF sends Registration Reject. However, it is questionable whether PCF needs to notify the AMF about completion of policy delivery.
- The AMF may release UE policy association before sending Registration Reject. However, if the association is not released, the association still remains even though the UE is not registered in the network.
- When the AMF provides target N3IWF information in the Registration Reject, if the UE supports, the UE uses the target N3IWF information to select N3IWF. However, if the UE changes Requested NSSAI, the target N3IWF information is not valid anymore.

The following methods may be proposed:
- Removes indication of completion of policy delivery from PCF to AMF.
- AMF release UE policy association before sending Registration Reject.
- The UE use the same Requested NSSAI with the one the UE included in the previous Registration Request message if the UE receives target N3IWF information in the Registration Reject message.

### (2) N3IWF selection

The UE may perform the procedure for selecting an N3IWF.

When the UE supports connectivity with N3IWF, as well as with ePDG, the UE may perform the procedure for selecting either an N3IWF or an ePDG, e.g. for selecting a non-3GPP access node.

In both cases above, the UE may be configured by the HPLMN with the same information that includes:
1) ePDG identifier configuration: It may contain the FQDN or IP address of the ePDG in the HPLMN. This may be used only when the UE supports connectivity with ePDG and attempts to select an ePDG. It may be ignored in all other cases.
2) N3IWF identifier configuration: It may contain the FQDN or IP address of the N3IWF in the HPLMN.
3) Extended Home N3IWF identifier configuration: It may contain one or multiple tuples of FQDN/IP address of the N3IWF in the HPLMN and the S-NSSAIs supported by this N3IWF.
4) Non-3GPP access node selection information: It may contain a prioritized list of PLMNs and for each PLMN it may include (i) a "Preference" parameter which indicates if ePDG or N3IWF is preferred in this PLMN and (ii) an FQDN parameter which indicates if the Tracking/Location Area Identity FQDN or the Operator Identifier FQDN should be used when discovering the address of an ePDG or N3IWF in this PLMN. The list of PLMNs may include the HPLMN and may include an "any PLMN" entry, which matches any PLMN the UE is connected to except the HPLMN.
5) Slice-specific N3IWF prefix configuration: It may contain one or multiple tuples consisting of:
   - List of supported S-NSSAIs;
   - Prefix for the Prefixed N3IWF OI or TA FQDNs.

NOTE 1: Extended Home N3IWF identifier configuration and Slice-specific N3IWF prefix configuration may be assumed to be provided to the UE as part of ANDSP.

The ePDG identifier configuration, the N3IWF identifier configuration, the Extended Home N3IWF identifier configuration and the Slice-specific N3IWF Prefix Configuration may be optional parameters, while the Non-3GPP access node selection information may be required and may include at least the HPLMN and the "any PLMN" entry.

If the ePDG identifier configuration is configured in the UE, then, when the UE decides to select an ePDG in the HPLMN, the UE may use the ePDG identifier configuration to find the IP address of the ePDG in the HPLMN and may ignore the FQDN parameter of the HPLMN in the Non-3GPP access node selection information.

If the N3IWF identifier configuration or the Extended Home N3IWF identifier configuration is configured in the UE, then, when the UE decides to select an N3IWF in the HPLMN, the UE may use the Extended Home N3IWF identifier configuration, if available, and otherwise the N3IWF identifier configuration to find the IP address of the N3IWF in the HPLMN and may ignore the FQDN parameter of the HPLMN in the Non-3GPP access node selection information.

The HPLMN's PCF may take the UE's subscribed S-NSSAIs into account when providing Extended Home N3IWF identifier configuration and/or Slice-specific N3IWF Prefix Configuration to the UE.

If a UE does not support the Extended Home N3IWF identifier configuration and the Slice-specific N3IWF Prefix Configuration, then the HPLMN may provide to the UE the Non-3GPP access node selection information and the N3IWF identifier configuration by taking into account the UE's subscribed S-NSSAIs.

NOTE 2: If the HPLMN deploys multiple N3IWFs with different TAs which support different S-NSSAIs, then the HPLMN may configure a UE with N3IWF identifier configuration so that the UE selects an N3IWF that supports the UE's subscribed S-NSSAIs.

The UE may be configured by the VPLMN with the following information applicable for the V-PLMN:

Slice-specific N3IWF prefix configuration: It may contain one or multiple tuples consisting of:
- List of supported S-NSSAIs;
- Prefix for the Prefixed N3IWF OI or TA FQDNs.

To enable the V-PCF to provide the UE with Slice-specific N3IWF prefix configuration, the AMF provides the V-PCF with the Configured NSSAI for the serving PLMN during the UE Policy Association Establishment/Modification procedure.

NOTE 3: In non-roaming cases, the UE PCF already receives the subscribed NSSAI from the UDR. Therefore, there may be no need for the AMF to provide the Configured NSSAI to the PCF in the non-roaming case.

NOTE 4: PCF (V-PCF in the roaming case) may be assumed to be locally configured with information about the slices supported by the different N3IWFs in the serving PLMN.

During the registration procedure the AMF may determine if the N3IWF selected by the UE is suitable for the S-NSSAI(s) requested by the UE considering the UE subscription.

If the AMF determines that the N3IWF selected by the UE is not suitable, the AMF may determine that a different N3IWF should be selected, In this case, the AMF:
- may, if the UE supports slice-based N3IWF selection, trigger the UE Policy Association Establishment or UE Policy Association Update procedure to provide the UE with updated N3IWF selection information; when the AMF detects that the update of N3IWF selection information is completed, the AMF may release UE Policy Association before proceeding to the Registration Reject;
- may send a Registration Reject message to the UE. The AMF may include target N3IWF information (FQDN and/or IP address) in the Registration Reject so that the UE can, if supported by the UE, use the target N3IWF information to select the N3IWF to register to 5GC. If the UE wants to include in a new registration request the same Requested NSSAI as included in a previous registration request, the UE may attempt to register with 5GC by selecting an N3IWF using the target N3IWF information (FQDN and/or IP address) (if supported by the UE).

The target N3IWF information only applies to the one N3IWF selection performed by the UE just after receiving the Registration Reject. If the UE use the target N3IWF information when performing Registration, the UE may include the same Requested NSSAI with the one included in the previous Registration Request. The UE may send a registration request including the same Requested NSSAI as included in a previous registration request.

Alternatively, the terminal may select some S-NSSAIs from the previously sent Requested NSSAI and transmit them as the Requested NSSAI.

Alternatively, only when the terminal selects the same or some S-NSSAIs as the previously sent Requested NSSAI and transmits them as the Requested NSSAI, the terminal may perform N3IWF selection using the target N3IWF information provided by the AMF. For example, when the terminal adds a new S-NSSAI other than the S-NSSAI previously included in the Requested NSSAI, the terminal may perform selection of new N3IWF according to the N3IWF selection procedure. In this case, the terminal may perform N3IWF selection without using the target N3IWF information.

The AMF may determine the N3IWF based on the list of supported TAs and the corresponding list of supported slices for each TA obtained.

### II. Second Embodiment

### (1) General

Method to prevent to prevent the UE from loop of registration request and AMF reject in case of error in policy update, in UE policy provided (etc.) is needed. The following methods may be proposed for this purpose:
- When the AMF detects that the UE is trying to register without selecting proper N3IWF multiple times, the AMF may accept UE registration and only include S-NSSAIs supported by the selected N3IWF in the Allowed NSSAI.

The question is whether there is a need for the PCF to notify AMF about the completion of policy delivery. The following methods may be proposed for this:
- Basically UE policy update procedure may be transparent to the AMF and the AMF may not know whether policy update is completed. But after policy update is completed, no messages may be exchanged between the UE and PCF. Then, the AMF may sent Registration Reject to the UE when the AMF detects that no messages are exchanged. The AMF may run locally configured inactivity timer to detect completion of UE policy update.

### (2) Registration procedure for untrusted non-3GPP access

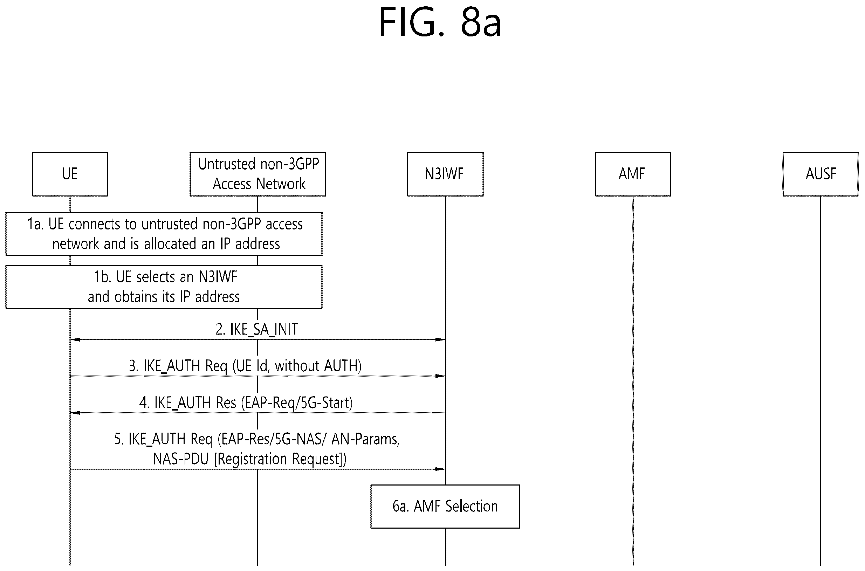

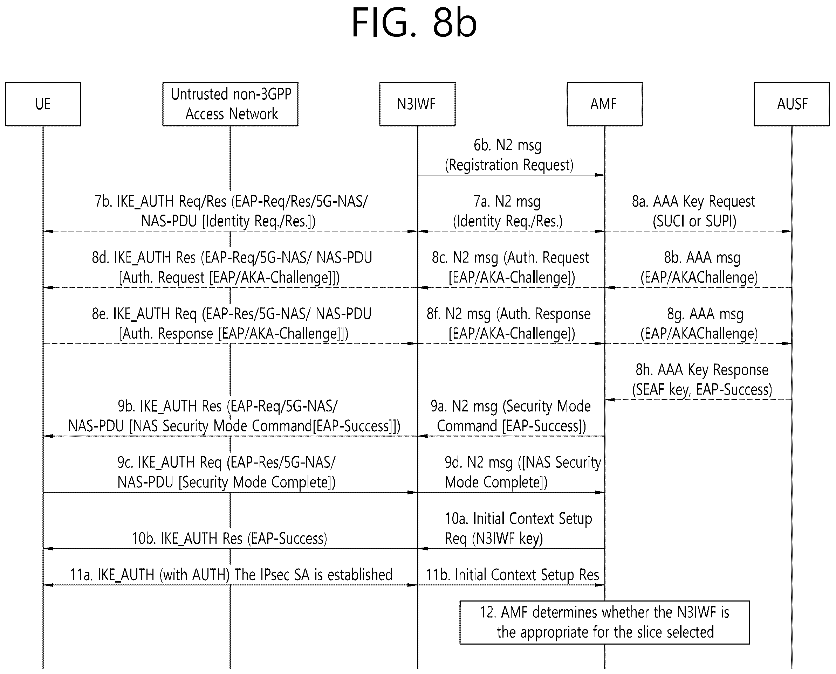

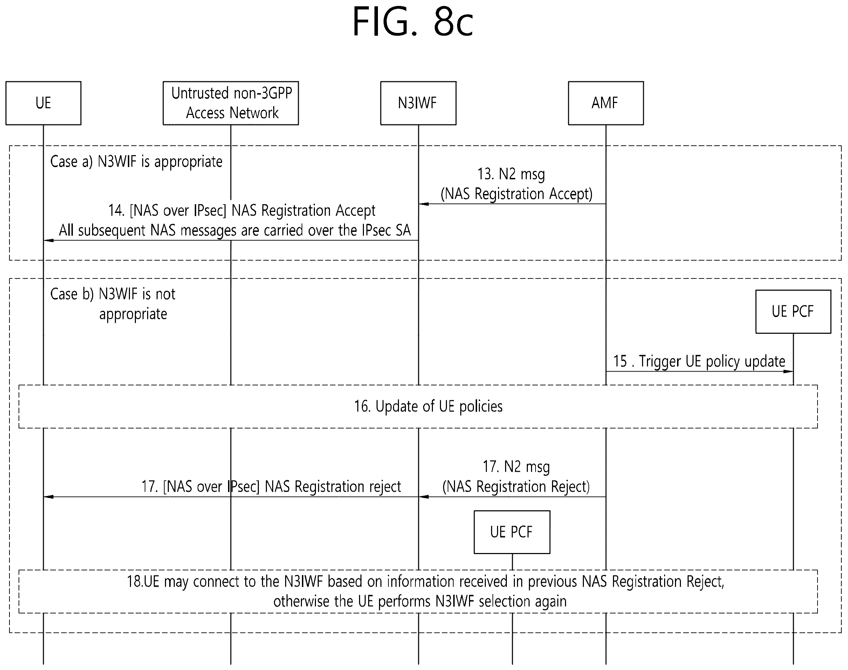

**FIG. 8a****,** **FIG. 8b** **and** **FIG. 8c** **show registration via untrusted non-3GPP access according to embodiments of the present specification.**

The signaling flow in FIG. 8a, FIG. 8b and FIG. 8c does not show all the details of a registration procedure via untrusted non-3GPP access. FIG. 8a, FIG. 8b and FIG. 8c show primarily the steps executed between the UE and N3IWF.
1. The UE may connect to an untrusted non-3GPP Access Network with any appropriate authentication procedure and it may be assigned an IP address. For example, a non-3GPP authentication method (e.g. no authentication (in the case of a free WLAN), EAP with pre-shared key, username/password, etc.) may be used. When the UE decides to attach to 5GC network, the UE not operating in SNPN access mode may select an N3IWF in a 5G PLMN. When the UE decides to attach to 5GC network, the UE operating in SNPN access mode may select an N3IWF in an SNPN.
   NOTE 1: The UE Selection of a N3IWF that supports the S-NSSAIs needed by the UE is enabled based on ANDSP configuration.
2. The UE may proceed with the establishment of an IPsec Security Association (SA) with the selected N3IWF by initiating an IKE initial exchange. After step 2, all subsequent IKE messages may be encrypted and integrity protected by using the IKE SA established in this step.
3. The UE may initiate an IKE_AUTH exchange by sending an IKE_AUTH request message. The AUTH payload may not be included in the IKE_AUTH request message, which indicates that the IKE_AUTH exchange shall use EAP signaling (in this case EAP-5G signaling). If the UE supports MOBIKE, it shall include a Notify payload in the IKE_AUTH request, indicating that MOBIKE is supported. In addition, if the UE is provisioned with the N3IWF root certificate, it may include the CERTREQ payload within the IKE_AUTH request message to request the N3IWF's certificate.
4. The N3IWF may respond with an IKE_AUTH response message, which includes an EAP-Request/5G-Start packet. The EAP-Request/SG-Start packet may inform the UE to initiate an EAP-5G session, e.g. to start sending NAS messages encapsulated within EAP-5G packets. If the N3IWF has received a CERTREQ payload from the UE, the N3IWF may include the CERT payload in the IKE_AUTH response message containing the N3IWF's certificate.
5. The UE may send an IKE_AUTH request, which includes an EAP-Response/5G-NAS packet that contains the Access Network parameters (AN parameters) and a Registration Request message. The AN parameters may contain information that is used by the N3IWF for selecting an AMF in the 5G core network. This information includes e.g. the GUAMI, the Selected PLMN ID (or PLMN ID and NID, see clause 5.30 of TS 23.501 [2]), the Requested NSSAI and the Establishment cause. The Establishment cause may provide the reason for requesting a signaling connection with 5GC. Whether and how the UE includes the Requested NSSAI as part of the AN parameters is dependent on the value of the Access Stratum Connection Establishment NSSAI Inclusion Mode parameter. The registration request may contain an indication that the UE supports N3IWF selection based on the slices the UE wishes to use over untrusted non-3GPP access (e.g. that the UE supports Extended Home N3IWF identifier configuration and Slice-specific N3IWF prefix configuration).
   NOTE 2: The N3IWF may not send an EAP-Identity request because the UE includes its identity in the first IKE AUTH.
6. The N3IWF may select an AMF based on the received AN parameters and local policy. The N3IWF may then forward the Registration Request received from the UE to the selected AMF within an N2 message. This message may contain N2 parameters that include the Selected PLMN ID and optionally the Selected NID and the Establishment cause.
   NOTE 3: The Selected NID may be present when the UE connects to an SNPN via Untrusted non-3GPP access.
7. The selected AMF may decide to request the SUCI by sending a NAS Identity Request message to UE. This NAS message and all subsequent NAS messages may be sent to UE encapsulated within EAP/5G-NAS packets.
8. The AMF may decide to authenticate the UE by invoking an AUSF. In this case, the AMF may select an AUSF based on SUPI or SUCI.

The AUSF may execute the authentication of the UE. The AUSF may select a UDM and may get the authentication data from UDM. The authentication packets may be encapsulated within NAS authentication messages and the NAS authentication messages may be encapsulated within EAP/5G-NAS packets. After the successful authentication:
- In step 8h, the AUSF may send the anchor key (SEAF key) to AMF which is used by AMF to derive NAS security keys and a security key for N3IWF (N3IWF key). The UE may also derive the anchor key (SEAF key) and from that key it derives the NAS security keys and the security key for N3IWF (N3IWF key). The N3IWF key may be used by the UE and N3IWF for establishing the IPsec Security Association (in step 11).
- In step 8h, the AUSF may also include the SUPI, if in step 8a the AMF provided to AUSF a SUCI.

NOTE 4: EAP-AKA' or 5G-AKA may be allowed for the authentication of UE via non-3GPP access. FIG. 8a, FIG. 8b and FIG. 8c only shows authentication flow using EAP-AKA'. Authentication methods other than EAP-AKA' or 5G-AKA may also be allowed for UE accessing SNPN services via a PLMN, as well as for UE accessing SNPN services directly via Untrusted non-3GPP access.

9a. The AMF may send a NAS Security Mode Command to UE in order to activate NAS security. If an EAP-AKA' authentication was successfully executed in step 8, the AMF may encapsulate the EAP-Success received from AUSF within the NAS Security Mode Command message.

9b. The N3IWF may forward the NAS Security Mode Command message to UE within an EAP/SG-NAS packet.

9c. The UE may complete the EAP-AKA' authentication (if initiated in step 8), create a NAS security context and an N3IWF key and send the NAS Security Mode Complete message within an EAP/5G-NAS packet.

9d. The N3IWF may relay the NAS Security Mode Complete message to the AMF.

10a. Upon receiving NAS Security Mode Complete, the AMF may send an NGAP Initial Context Setup Request message that includes the N3IWF key.

10b. This may trigger the N3IWF to send an EAP-Success to UE, which completes the EAP-5G session. No further EAP-5G packets may be exchanged.

11. The IPsec SA may be established between the UE and N3IWF by using the common N3IWF key that was created in the UE in step 9c and received by the N3IWF in step 10a. This IPsec SA may be referred to as the "signaling IPsec SA". After the establishment of the signaling IPsec SA, the N3IWF may notify the AMF that the UE context (including AN security) was created by sending a NGAP Initial Context Setup Response. The signaling IPsec SA may be configured to operate in tunnel mode and the N3IWF may assign to UE an "inner" IP address. If the N3IWF has received an indication that the UE supports MOBIKE (see step 3), then the N3IWF may include a Notify payload in the IKE_AUTH response message sent in step 11a, indicating that MOBIKE shall be supported.

All subsequent NAS messages exchanged between the UE and N3IWF may be sent via the signaling IPsec SA and may be carried over TCP/IP. The UE may send NAS messages within TCP/IP packets with source address the "inner" IP address of the UE and destination address the NAS_IP_ADDRESS that is received in step 11a. The N3IWF may send NAS messages within TCP/IP packets with source address the NAS_IP_ADDRESS and destination address the "inner" IP address of the UE. The TCP connection used for reliable NAS transport between the UE and N3IWF may be initiated by the UE right after the signaling IPsec SA is established in step 11a. The UE may send the TCP connection request to the NAS_IP _ADDRESS and to the TCP port number.

12. The AMF may determine the subset of the requested NSSAI that is allowed by the subscribed S-NSSAI(s); the AMF may detect that the N3IWF used by the UE is not compatible with this subset and then proceed with steps 15-19. Otherwise, e.g. if the N3IWF supports the subset of the requested NSSAI that is allowed by the subscribed S-NSSAI(s), the AMF may proceed with step 13 and 14 and steps 15-19 may be skipped.

NOTE 5: The AMF may consider the subscribed S-NSSAI(s) before determining to trigger the UE PCF to avoid triggering the UE PCF to update the UE policies for Requested S-NSSAIs that the UE is not subscribed for.

13. The AMF may send the NAS Registration Accept message in an N2 message sent to the N3IWF. The N2 Message may include the Allowed NSSAI for the access type for the UE. The Allowed NSSAI is a subset of the slices supported by the selected N3IWF.

14. The N3IWF may forward the NAS Registration Accept message to UE via the established signaling IPsec SA. If the NAS Registration Accept message is received by the N3IWF before the IPsec SA is established, the N3IWF may store it and forward it to the UE only after the establishment of the signaling IPsec SA.

Steps 15 to 19 may correspond to the case where the AMF has detected that the N3IWF used by the UE is not compatible with the subset of the requested NSSAI that is allowed by the subscribed S-NSSAI(s).

If the AMF detects that the UE keeps registering by using the same N3IWF multiple times based on the AMF implementation, the AMF may accept UE registration and may allow to use S-NSSAIs supported by the selected N3IWF instead of rejecting the UE registration.

The AMF may perform the above actions not only when the UE requests registration through the same N3IWF but also when the UE requests registration multiple times through different N3IWFs. For example, when the UE requests registration multiple times through different N3IWFs, the AMF may accept the UE registration instead of rejecting the UE registration and the AMF may allow the use of S-NSSAI supported by the selected N3IWF.

The AMF may act as follows to know that the UE is rejected the registration request multiple times through the same or different N3IWFs.

The AMF may generally store the context of the UE even if the UE is deregistered, considering that the UE will register again. Similarly, when the UE requests registration through an N3IWF that does not support slices, the AMF may store the context of the UE while rejecting the registration request of the UE. Also, if the AMF rejects the registration request because the N3IWF does not support the slice requested by the UE, the AMF may store information such as how many times it rejected and which N3IWF the UE selected, etc.

If necessary, the AMF may send, to the UE, the target N3IWF information while giving the UE a registration reject before approving the UE's request. For example, the current N3IWF may not support any of the slices requested by the UE. In this case, in order to allow the UE to use the default slice in the subscriber information, the AMF may send the target N3IWF information to the UE so that the UE can select the N3IWF that supports the default slice. Afterwards, when the UE transmits a registration request through the target N3IWF, the AMF may determine the Allowed NSSAI that the UE will use among the slices supported by the target N3IWF.

To this end, the AMF may store the requested NSSAI information requested by the UE while rejecting the UE's registration request. In addition, if AMF has transmitted target N3IWF information to the terminal, AMF may store the transmitted target N3IWF information (etc.) in the terminal context. Based on this information, AMF may detect that the terminal is repeatedly requesting registration when the terminal sends a registration request again. At this time, AMF may decide whether to accept only some of the slices requested by the terminal.

15. If the UE Registration Request contains an indication that the UE supports N3IWF selection based on the slices the UE wishes to use over untrusted non-3GPP access, the AMF may trigger the UE PCF to update the N3IWF selection-related policy on the UE contained in ANDSP. The UE PCF may be a PCF that creates a UE Policy Association.

NOTE 6: The UE is assumed to inform PCF whether the UE supports Extended Home N3IWF identifier configuration and Slice-specific N3IWF prefix configuration as part of the UE policy update procedure. Details will be specified in Stage 3 specifications.

NOTE 6: The UE may be assumed to inform PCF whether the UE supports Extended Home N3IWF identifier configuration and Slice-specific N3IWF prefix configuration as part of the UE policy update procedure.

16. The PCF may update the UE policy. The AMF may start locally configured timer to detect completion of policy update.

17. If the timer started in step 16 is expired, the AMF may send via the N3IWF a UE Registration Reject indicating that the UE selected N3IWF was not appropriate for the requested slices that the UE is allowed to access to. The AMF optionally may provide target N3IWF information (FQDN and/or IP address) to the UE within the Registration Reject message.

NOTE 7: The AMF may determine a target N3IWF that supports the subset of the requested NSSAI that is allowed by the subscribed S-NSSAI(s) based on the list of supported TAs and the corresponding list of supported slices for each TA obtained in N2 interface management procedures.

18. If supported by the UE and if the UE received target N3IWF information in step 17, the UE may connect to the target N3IWF, otherwise the UE may perform N3IWF selection again using the updated N3IWF selection information received in step 16. The UE may use the target N3IWF information in the Registration Reject only for the N3IWF selection directly following the rejected registration and UE may not store for future use.

The AMF may provide the Access Type set to "Non-3GPP access" to the UDM when it registers with the UDM and the RAT type determined as specified.

NOTE 8: The Access Type and the RAT type may be set to "Untrusted Non-3GPP access" even when the UE accesses SNPN services via PLMN over 3GPP access.

### III. Third embodiment

### (1) General

The following problems may occur:
- The AMF may release UE policy association before sending Registration Reject. However, if the association is not released, the association may still remain even though the UE is not registered in the network.
- In case of untrusted non-3GPP access, the AMF may notify the PCF that N3IWF selection information needs to be updated. On the other hands, in case of trusted non-3GPP access, the AMF may notify the PCF that TNGF selection information needs to be updated. It seems that there is no need to have separate notification since the AMF also reports access type, RAT type based on PCRT. Based on such information, whether to update whole ANDSP or WLANSP or N3IWF selection information may be up to the PCF.
- When the AMF provides target N3IWF/TNAN information in the Registration Reject, if the UE supports, the UE may use the target N3IWF/TNAN information. However, if the UE changes Requested NSSAI, the target N3IWF/TNAN information may be not valid anymore.

The following methods may be proposed:
- Instead of notifying N3IWF selection udpate/TNGF selection update, the AMF may notify the PCF that UE policy updated is needed for both untrusted and trusted non-3GPP access.
- AMF may release UE policy association before sending Registration Reject.
- The UE may use the same Requested NSSAI with the one the UE included in the previous Registration Request message if the UE receives target N3IWF/TNAN information in the Registration Reject message.

### (2) N3IWF selection

The UE may perform the procedure for selecting an N3IWF.

When the UE supports connectivity with N3IWF, as well as with ePDG, the UE may perform the procedure for selecting either an N3IWF or an ePDG, e.g. for selecting a non-3GPP access node.

In both cases above, the UE may be configured by the HPLMN with the same information that includes:
1) ePDG identifier configuration: It may contain the FQDN or IP address of the ePDG in the HPLMN. This may be used only when the UE supports connectivity with ePDG and attempts to select an ePDG. It may be ignored in all other cases.
2) N3IWF identifier configuration: It may contain the FQDN or IP address of the N3IWF in the HPLMN.
3) Extended Home N3IWF identifier configuration: It may contain one or multiple tuples of FQDN/IP address of the N3IWF in the HPLMN and the S-NSSAIs supported by this N3IWF.
4) Non-3GPP access node selection information: It may contain a prioritized list of PLMNs and for each PLMN it may include (i) a "Preference" parameter which indicates if ePDG or N3IWF is preferred in this PLMN and (ii) an FQDN parameter which indicates if the Tracking/Location Area Identity FQDN or the Operator Identifier FQDN should be used when discovering the address of an ePDG or N3IWF in this PLMN. The list of PLMNs may include the HPLMN and may include an "any PLMN" entry, which matches any PLMN the UE is connected to except the HPLMN.
5) Slice-specific N3IWF prefix configuration: It may contain one or multiple tuples consisting of:
   - List of supported S-NSSAIs;
   - Prefix for the Prefixed N3IWF OI or TA FQDNs.

NOTE 1: Extended Home N3IWF identifier configuration and Slice-specific N3IWF prefix configuration may be assumed to be provided to the UE as part of ANDSP.

The ePDG identifier configuration, the N3IWF identifier configuration, the Extended Home N3IWF identifier configuration and the Slice-specific N3IWF Prefix Configuration may be optional parameters, while the Non-3GPP access node selection information may be required and may include at least the HPLMN and the "any PLMN" entry.

If the ePDG identifier configuration is configured in the UE, then, when the UE decides to select an ePDG in the HPLMN, the UE may use the ePDG identifier configuration to find the IP address of the ePDG in the HPLMN and may ignore the FQDN parameter of the HPLMN in the Non-3GPP access node selection information.

If the N3IWF identifier configuration or the Extended Home N3IWF identifier configuration is configured in the UE, then, when the UE decides to select an N3IWF in the HPLMN, the UE may use the Extended Home N3IWF identifier configuration, if available, and otherwise the N3IWF identifier configuration to find the IP address of the N3IWF in the HPLMN and may ignore the FQDN parameter of the HPLMN in the Non-3GPP access node selection information.

The HPLMN's PCF may take the UE's subscribed S-NSSAIs into account when providing Extended Home N3IWF identifier configuration and/or Slice-specific N3IWF Prefix Configuration to the UE.

If a UE does not support the Extended Home N3IWF identifier configuration and the Slice-specific N3IWF Prefix Configuration, then the HPLMN may provide to the UE the Non-3GPP access node selection information and the N3IWF identifier configuration by taking into account the UE's subscribed S-NSSAIs.

NOTE 2: If the HPLMN deploys multiple N3IWFs with different TAs which support different S-NSSAIs, then the HPLMN may configure a UE with N3IWF identifier configuration so that the UE selects an N3IWF that supports the UE's subscribed S-NSSAIs.

The UE may be configured by the VPLMN with the following information applicable for the V-PLMN:

Slice-specific N3IWF prefix configuration: It may contain one or multiple tuples consisting of:
- List of supported S-NSSAIs;
- Prefix for the Prefixed N3IWF OI or TA FQDNs.

To enable the V-PCF to provide the UE with Slice-specific N3IWF prefix configuration, the AMF may provide the V-PCF with the Configured NSSAI for the serving PLMN during the UE Policy Association Establishment/Modification procedure.

NOTE 3: In non-roaming cases, the UE PCF may already receive the subscribed NSSAI from the UDR. Therefore, there may be no need for the AMF to provide the Configured NSSAI to the PCF in the non-roaming case.

NOTE 4: PCF (V-PCF in the roaming case) may be assumed to be locally configured with information about the slices supported by the different N3IWFs in the serving PLMN.

During the registration procedure, the AMF may determine if the N3IWF selected by the UE is suitable for the S-NSSAI(s) requested by the UE considering the UE subscription.

If the AMF determines that the N3IWF selected by the UE is not suitable, the AMF may determine that a different N3IWF should be selected. In this case, the AMF:
- may, if the UE supports slice-based N3IWF selection, trigger the UE Policy Association Establishment or UE Policy Association Update procedure to provide the UE with updated N3IWF selection information; when the AMF is informed by the PCF that the update of UE policy information on the UE is completed, the AMF may release UE Policy Association before proceeding to the Registration Reject if the UE is not registered over 3GPP access;
- may send a Registration Reject message to the UE. The AMF may include target N3IWF information (FQDN and/or IP address) in the Registration Reject so that the UE can, if supported by the UE, use the target N3IWF information to select the N3IWF to register to 5GC. If the UE wants to include the same Requested NSSAI as included in a previous registration request in a new registration request, the UE may register with the 5GC by selecting an N3IWF using the target N3IWF information (FQDN and/or IP address) (if supported by the UE).

The target N3IWF information may only apply to the one N3IWF selection performed by the UE just after receiving the Registration Reject. If the UE uses the target N3IWF information when performing Registration, the UE may include the same Requested NSSAI with the one included in the previous Registration Request. The UE may transmit registration request including the same Requested NSSAI with the one included in the previous Registration Request

The previous Registration Request message refers to a registration request that triggered a Registration Reject containing target N3IWF information. For example, the previous Registration Request may trigger a Registration Reject containing target N3IWF information.

If the terminal wants to request registration by changing the Requested NSSAI, selection procedure of a new N3IWF according to the N3IWF selection procedure may be performed instead of the target N3IWF information. For example, the target N3IWF information may be used only when the Requested NSSAI is sent identically or a subset of the previous Requested NSSAI is sent as the Requested NSSAI.

The AMF may determine the N3IWF based on the list of supported TAs and the corresponding list of supported slices for each TA obtained.

### (3) Access Network Selection Procedure

The steps below may specify the steps executed by the UE when the UE wants to select and connect to a PLMN over trusted non-3GPP access. The UE may execute these steps before connecting to a trusted non-3GPP access network. This may be different from the untrusted non-3GPP access, where the UE first connects to a non-3GPP access network, it obtains IP configuration and then proceeds to PLMN selection and ePDG/N3IWF selection. In the case of trusted non-3GPP access, the UE use 3GPP-based authentication for connecting to a non-3GPP access, so it may first select a PLMN and then attempt to connect to a non-3GPP access.

Step 1: The UE may construct a list of available PLMNs, with which trusted connectivity is supported. This list may contain the PLMNs included in the PLMN List-2 and PLMN List-3, advertised by all discovered non-3GPP access networks. For each PLMN the supported type(s) of trusted connectivity may be also included.
a. The list of available PLMNs includes:
   - PLMN-a: "S2a connectivity", "5G connectivity"
   - PLMN-b: "5G connectivity"
   - PLMN-c: "S2a connectivity", "5G connectivity"
   - PLMN-d: "S2a connectivity"

Step 2: The UE may select a PLMN that is included in the list of available PLMNs, as follows:
a. If the UE is connected to a PLMN via 3GPP access and this PLMN is included in the list of available PLMNs, the UE may select this PLMN. If this PLMN is not included in the list of available PLMNs, but it is included in the "Non-3GPP access node selection information" in the UE, the UE may select this PLMN and executes the combined ePDG/N3IWF selection procedure.
b. Otherwise (the UE is not connected to a PLMN via 3GPP access, or the UE is connected to a PLMN via 3GPP access but this PLMN is neither in the list of available PLMNs nor in the "Non-3GPP access node selection information"), the UE may determine the country it is located in by using implementation specific means.
   i) If the UE determines to be located in its home country, then:
      - The UE may select the HPLMN, if included in the list of available PLMNs. Otherwise, the UE may select an E-HPLMN (Equivalent HPLMN), if an E-HPLMN is included in the list of available PLMNs. If the list of available PLMNs does not include the HPLMN and does not include an E-HPLMN, the UE may stop the procedure and may attempt to connect via untrusted non-3GPP access (e.g. it may execute the N3IWF selection procedure).
   ii) If the UE determines to be located in a visited country, then:
      - The UE may determine if it is mandatory to select a PLMN in the visited country, as follows:
      - If the UE has IP connectivity (e.g. the UE is connected via 3GPP access), the UE may send a DNS query and receives a DNS response that indicates if a PLMN must be selected in the visited country. The DNS response may include also a lifetime that denotes how long the DNS response can be cached for. The FQDN in the DNS query shall be different from the Visited Country FQDN that is used for ePDG/N3IWF selection. The DNS response may not include a list of PLMNs that support trusted connectivity in the visited country, but may have to only include an indication of whether a PLMN must be selected in the visited country or not.
      - If the UE has no IP connectivity (e.g. the UE is not connected via 3GPP access), then the UE may use a cached DNS response that was received in the past, or may use local configuration that indicates which visited countries mandate a PLMN selection in the visited country.
      - If the UE determines that it is not mandatory to select a PLMN in the visited country, and the HPLMN or an E-HPLMN is included in the list of available PLMNs, then the UE may select the HPLMN or an E-HPLMN, whichever is included in the list of available PLMNs.
      - Otherwise, the UE may select a PLMN in the visited country by considering, in priority order, the PLMNs, first, in the User Controlled PLMN Selector list and, next, in the Operator Controlled PLMN Selector list. The UE may select the highest priority PLMN in a PLMN Selector list that is also included in the list of available PLMNs;
      - If the list of available PLMNs does not include a PLMN that is also included in a PLMN Selector list, the UE may stop the procedure and may attempt to connect via untrusted non-3GPP access.
c. The UE may select PLMN-c, for which "S2a connectivity" and "5G connectivity" is supported.

Step 3: The UE may select the type of trusted connectivity ("S2a connectivity" or "5G connectivity") for connecting to the selected PLMN, as follows:
a. If the list of available PLMNs indicates that both "S2a connectivity" and "5G connectivity" is supported for the selected PLMN, then the UE may have to select "5G connectivity" because it is the preferred type of trusted access.
b. Otherwise, if the list of available PLMNs indicates that only one type of trusted connectivity (either "S2a connectivity" or "5G connectivity") is supported for the selected PLMN, the UE may select this type of trusted connectivity.
c. The UE may select PLMN-c and "5G connectivity". There may be two non-3GPP access networks that support "5G connectivity" to PLMN-c: the WLAN access network 2 and the WLAN access network 4.

Step 4: Finally, the UE may select a non-3GPP access network to connect to, as follows:
a. The UE may put the available non-3GPP access networks in priority order. For WLAN access, the UE may construct a prioritized list of WLAN access networks by using the WLANSP rules (if provided) and the procedure specified. When the UE supports the selection of Trusted access supporting the network slices it desires to use and has received extended WLANSP rule, the UE may select the non-3GPP access network with the SSID(s) which can access to the TNGF supporting the S-NSSAI needed by the UE. If the UE is not provided with WLANSP rules, the UE may construct the prioritized list of WLAN access networks by using an implementation specific procedure. For other types of non-3GPP access, the UE may use access specific information to construct this prioritized list.
b. From the prioritized list of non-3GPP access networks, the UE may select the highest priority non-3GPP access network that supports the selected type of trusted connectivity to the selected PLMN.
c. The UE may select either the WLAN access network 2 or the WLAN access network 4, whichever has the highest priority in the prioritized list of non-3GPP access networks.
d. Over the selected non-3GPP access network, the UE may start the 5GC registration procedure specified.
e. If the AMF detects the UE is using a wrong TNGF, the AMF may trigger a UE policy update and reject the UE registration

During the registration procedure, the AMF may determine if the TNGF selected by the UE is suitable for the S-NSSAI(s) requested by the UE considering the UE subscription. If the AMF determines that a different TNGF should be selected, the AMF:
- may, if the UE supports slice-based TNGF selection, trigger the UE Policy Association Establishment or UE Policy Association Update procedure to provide the UE with updated TNGF selection information; when the AMF is informed by the PCF that the update of UE policy information on the UE is completed, the AMF may release UE Policy Association if it is not needed before proceeding to the Registration Reject if the UE is not registered over 3GPP access;

NOTE: To enable the V-PCF to provide the UE with Slice-specific TNGF selection information in the roaming case, the AMF may provide the V-PCF with the Configured NSSAI for the serving PLMN during the UE Policy Association Establishment/Update procedure.
- may send a Registration Reject message to the UE. The AMF may include target TNAN information (SSID, TNGF ID) in the Registration Reject so that the UE can, if supported by the UE, use the target TNAN information to try again to register to 5GC. If the UE wishes to include in the new registration request the same Requested NSSAI as included in the previous registration request, the UE may attempt to register to 5GC using target TNAN information (if supported by the UE).

The UE may select a TNAN using the target TNAN information. The selected TNAN may be the same as the previous TNAN. Alternatively, the selected TNAN may be different from the previous TNAN.

The UE may send a registration request message to the selected TNAN. Then, the registration request message may be forwarded to the AMF via the TNGF of the selected TNAN. The TNGF here may be different from the TNGF involved in the previous registration request message.

The target TNAN information may only apply to the one TNAN selection performed by the UE just after receiving the Registration Reject. If the UE uses the target TNAN information when performing Registration, the UE may include the same Requested NSSAI with the one included in the previous Registration Request. The UE may transmit a registration request including the same Requested NSSAI with the one included in the previous Registration Request

The previous Registration Request message refers to a registration request that triggered a Registration Reject containing target TNAN information. For example, the previous Registration Request may trigger a Registration Reject containing target TNAN information.

If the terminal wants to request registration by changing the Requested NSSAI, a new WLAN selection process according to the WLANSP rule may be performed instead of the target TNAN information. For example, the target TNAN information may be used only when the Requested NSSAI is sent identically or a subset of the previous Requested NSSAI is sent as the Requested NSSAI.

The AMF may determine TNGF based on the list of supported TAs and the corresponding list of supported slices for each TA obtained.

### IV. Fourth embodiment

### (1) General

Method to prevent to prevent the UE from loop of registration request and AMF reject in case of error in policy update, in UE policy provided (etc.) is needed. The following methods may be proposed for this purpose:
- When the AMF detects that the UE is trying to register without selecting proper N3IWF multiple times, the AMF may accept UE registration and only include S-NSSAIs supported by the selected N3IWF in the Allowed NSSAI.

The question is whether there is a need for the PCF to notify AMF about the completion of policy delivery. The following methods may be proposed for this:
- According to updated WIDs, PCF may notify the AMF when the policy delivery is completed.

In case of untrusted non-3GPP access, the AMF may notify the PCF that N3IWF selection information needs to be updated. On the other hands, in case of trusted non-3GPP access, the AMF may notify the PCF that TNGF selection information needs to be updated. It seems that there is no need to have separate notification since the AMF also reports access type, RAT type based on PCRT. Based on such information, whether to update whole ANDSP or WLANSP or N3IWF selection information may be up to the PCF.

AMF may notify the PCF to update UE policy instead of notifying to update N3IWF/TNGF selection information.

### (2) registration procedure for untrusted non-3GPP access

The fourth embodiment will be described below with reference to FIG. 8a, FIG. 8b and FIG. 8c.

The signaling flow in FIG. 8a, FIG. 8b and FIG. 8c does not show all the details of a registration procedure via untrusted non-3GPP access. It shows primarily the steps executed between the UE and N3IWF.
1. The UE may connect to an untrusted non-3GPP Access Network with any appropriate authentication procedure and it may be assigned an IP address. For example, a non-3GPP authentication method may be used, e.g. no authentication (in the case of a free WLAN), EAP with pre-shared key, username/password, etc. When the UE decides to attach to 5GC network, the UE not operating in SNPN access mode for NWu interface may select an N3IWF in a 5G PLMN. When the UE decides to attach to 5GC network, the UE operating in SNPN access mode for NWu interface may select an N3IWF in an SNPN.
   NOTE 1: The UE Selection of a N3IWF that supports the S-NSSAIs needed by the UE may be enabled based on ANDSP configuration.
2. The UE may proceed with the establishment of an IPsec Security Association (SA) with the selected N3IWF by initiating an IKE initial exchange. After step 2, all subsequent IKE messages may be encrypted and integrity protected by using the IKE SA established in this step.
3. The UE may initiate an IKE_AUTH exchange by sending an IKE_AUTH request message. The AUTH payload may not be included in the IKE_AUTH request message, which indicates that the IKE_AUTH exchange shall use EAP signaling (in this case EAP-5G signaling). If the UE supports MOBIKE, it may include a Notify payload in the IKE_AUTH request, indicating that MOBIKE is supported. In addition, if the UE is provisioned with the N3IWF root certificate, it may have to include the CERTREQ payload within the IKE_AUTH request message to request the N3IWF's certificate. In the case of WLAN access, if the UE has an MPS subscription, the UE may include a Notify payload in the IKE_AUTH request indicating its MPS subscription.
   NOTE 2: Based on operator policy, the N3IWF may use the MPS subscription indication at this time to handle this UE with priority.
4. The N3IWF may respond with an IKE_AUTH response message, which includes an EAP-Request/5G-Start packet. The EAP-Request/5G-Start packet may inform the UE to initiate an EAP-5G session, e.g. to start sending NAS messages encapsulated within EAP-5G packets. If the N3IWF has received a CERTREQ payload from the UE, the N3IWF may have to include the CERT payload in the IKE_AUTH response message containing the N3IWF's certificate.
5. The UE may send an IKE_AUTH request, which includes an EAP-Response/5G-NAS packet that contains the Access Network parameters (AN parameters) and a Registration Request message. The AN parameters may contain information that is used by the N3IWF for selecting an AMF in the 5G core network. This information includes e.g. the GUAMI, the Selected PLMN ID (or PLMN ID and NID, see clause 5.30 of TS 23.501 [2]), the Requested NSSAI and the Establishment cause. The Establishment cause may provide the reason for requesting a signaling connection with 5GC. Whether and how the UE includes the Requested NSSAI as part of the AN parameters is dependent on the value of the Access Stratum Connection Establishment NSSAI Inclusion Mode parameter. The registration request may contain an indication that the UE supports N3IWF selection based on the slices the UE wishes to use over untrusted non-3GPP access (e.g. that the UE supports Extended Home N3IWF identifier configuration and Slice-specific N3IWF prefix configuration).
   NOTE 3: The N3IWF may not send an EAP-Identity request because the UE includes its identity in the first IKE AUTH.
6. The N3IWF may select an AMF based on the received AN parameters and local policy. The N3IWF may then forward the Registration Request received from the UE to the selected AMF within an N2 message. This message may contain N2 parameters that include the Selected PLMN ID and optionally the Selected NID and the Establishment cause.
   NOTE 4: The Selected NID may be present when the UE connects to an SNPN via Untrusted non-3GPP access.
7. The selected AMF may decide to request the SUCI by sending a NAS Identity Request message to UE. This NAS message and all subsequent NAS messages may be sent to UE encapsulated within EAP/5G-NAS packets.
8. The AMF may decide to authenticate the UE by invoking an AUSF. In this case, the AMF may select an AUSF based on SUPI or SUCI.

The AUSF may execute the authentication of the UE. The AUSF may select a UDM and may get the authentication data from UDM. The authentication packets may be encapsulated within NAS authentication messages and the NAS authentication messages may be encapsulated within EAP/5G-NAS packets. After the successful authentication:
- In step 8h, the AUSF may send the anchor key (SEAF key) to AMF which is used by AMF to derive NAS security keys and a security key for N3IWF (N3IWF key). The UE may also derive the anchor key (SEAF key) and from that key it derives the NAS security keys and the security key for N3IWF (N3IWF key). The N3IWF key may be used by the UE and N3IWF for establishing the IPsec Security Association (in step 11).
- In step 8h, the AUSF may also include the SUPI, if in step 8a the AMF provided to AUSF a SUCI.

NOTE 5: EAP-AKA' or 5G-AKA may be allowed for the authentication of UE via non-3GPP access. FIG. 8a, FIG. 8b and FIG. 8c only shows authentication flow using EAP-AKA'. Authentication methods other than EAP-AKA' or 5G-AKA may also be allowed for UE accessing SNPN services via a PLMN, as well as for UE accessing SNPN services directly via Untrusted non-3GPP access.

9a. The AMF may send a NAS Security Mode Command to UE in order to activate NAS security. If an EAP-AKA' authentication was successfully executed in step 8, the AMF may encapsulate the EAP-Success received from AUSF within the NAS Security Mode Command message.

9b. The N3IWF may forward the NAS Security Mode Command message to UE within an EAP/5G-NAS packet.

9c. The UE may complete the EAP-AKA' authentication (if initiated in step 8), create a NAS security context and an N3IWF key and send the NAS Security Mode Complete message within an EAP/5G-NAS packet.

9d. The N3IWF may relay the NAS Security Mode Complete message to the AMF.

10a. Upon receiving NAS Security Mode Complete, the AMF may send an NGAP Initial Context Setup Request message that includes the N3IWF key.

10b. This may trigger the N3IWF to send an EAP-Success to UE, which completes the EAP-5G session. No further EAP-5G packets may be exchanged.

11. The IPsec SA may be established between the UE and N3IWF by using the common N3IWF key that was created in the UE in step 9c and received by the N3IWF in step 10a. This IPsec SA may be referred to as the "signaling IPsec SA". After the establishment of the signaling IPsec SA, the N3IWF may notify the AMF that the UE context (including AN security) was created by sending a NGAP Initial Context Setup Response. The signaling IPsec SA may be configured to operate in tunnel mode and the N3IWF may assign to UE an "inner" IP address. If the N3IWF has received an indication that the UE supports MOBIKE (see step 3), then the N3IWF may include a Notify payload in the IKE_AUTH response message sent in step 11a, indicating that MOBIKE shall be supported.

All subsequent NAS messages exchanged between the UE and N3IWF may be sent via the signaling IPsec SA and may be carried over TCP/IP. The UE may send NAS messages within TCP/IP packets with source address the "inner" IP address of the UE and destination address the NAS_IP ADDRESS that is received in step 11a. The N3IWF may send NAS messages within TCP/IP packets with source address the NAS_IP_ADDRESS and destination address the "inner" IP address of the UE. The TCP connection used for reliable NAS transport between the UE and N3IWF may be initiated by the UE right after the signaling IPsec SA is established in step 11a. The UE may send the TCP connection request to the NAS_IP _ADDRESS and to the TCP port number.

12. The AMF may determine the subset of the requested NSSAI that is allowed by the subscribed S-NSSAI(s); the AMF may detect that the N3IWF used by the UE is not compatible with this subset and then proceed with steps 15-19. Otherwise, e.g. if the N3IWF supports the subset of the requested NSSAI that is allowed by the subscribed S-NSSAI(s), the AMF may proceed with step 13 and 14 and steps 15-19 may be skipped.

NOTE 6: The AMF may consider the subscribed S-NSSAI(s) before determining to trigger the UE PCF to avoid triggering the UE PCF to update the UE policies for Requested S-NSSAIs that the UE is not subscribed for.

13. The AMF may send the NAS Registration Accept message in an N2 message sent to the N3IWF. The N2 Message may include the Allowed NSSAI for the access type for the UE. The Allowed NSSAI is a subset of the slices supported by the selected N3IWF.

14. The N3IWF may forward the NAS Registration Accept message to UE via the established signaling IPsec SA. If the NAS Registration Accept message is received by the N3IWF before the IPsec SA is established, the N3IWF may store it and forward it to the UE only after the establishment of the signaling IPsec SA.

Steps 15 to 19 may correspond to the case where the AMF has detected that the N3IWF used by the UE is not compatible with the subset of the requested NSSAI that is allowed by the subscribed S-NSSAI(s).

If the AMF detects that the UE keeps registering by using the same N3IWF multiple times based on the AMF implementation, the AMF may accept UE registration and may allow to use S-NSSAIs supported by the selected N3IWF instead of rejecting the UE registration.

15. If the UE Registration Request contains an indication that the UE supports N3IWF selection based on the slices the UE wishes to use over untrusted non-3GPP access, the AMF may trigger the UE PCF to update the policies on the UE. The UE PCF may be a PCF that creates a UE Policy Association.

Whether the PCF updates whole ANDSP or only updates N3IWF selection information may be up to PCF decision considering allocated PSI and operator policy.

The UE may be assumed to inform PCF whether the UE supports Extended Home N3IWF identifier configuration and Slice-specific N3IWF prefix configuration as part of the UE policy update procedure.

16. The PCF may update the UE policy. When the UE policy update is terminated, the PCF may notify the AMF.

17. The AMF may send via the N3IWF a UE Registration Reject indicating that N3IWF selected by the UE was not appropriate for the requested slices that the UE is allowed to access to. The AMF optionally may provide target N3IWF information (FQDN and/or IP address) to the UE within the Registration Reject message.

The AMF may determine a target N3IWF that supports the subset of the requested NSSAI that is allowed by the subscribed S-NSSAI(s) based on the list of supported TAs and the corresponding list of supported slices for each TA obtained in N2 interface management procedures.

18. If supported by the UE and if the UE received target N3IWF information in step 17, the UE may connect to the target N3IWF, otherwise the UE may perform N3IWF selection again using the updated N3IWF selection information received in step 16. The UE may use the target N3IWF information in the Registration Reject only for the N3IWF selection directly following the rejected registration. And, UE may not store for future use. If the UE uses the target N3IWF information when performing Registration, the UE may have to include the same Requested NSSAI with the one included in the previous Registration Request.

The AMF may provide the Access Type set to "Non-3GPP access" to the UDM when it registers with the UDM and the RAT type determined.

The Access Type and the RAT type may be set to "Untrusted Non-3GPP access" even when the UE accesses SNPN services via PLMN over 3GPP access.

### (3) Registration procedure for trusted non-3GPP access

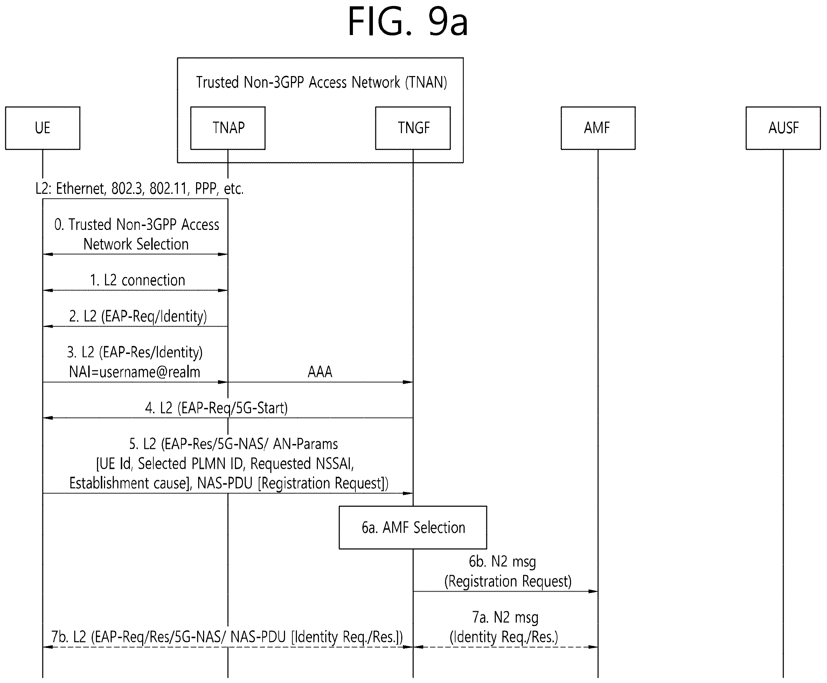

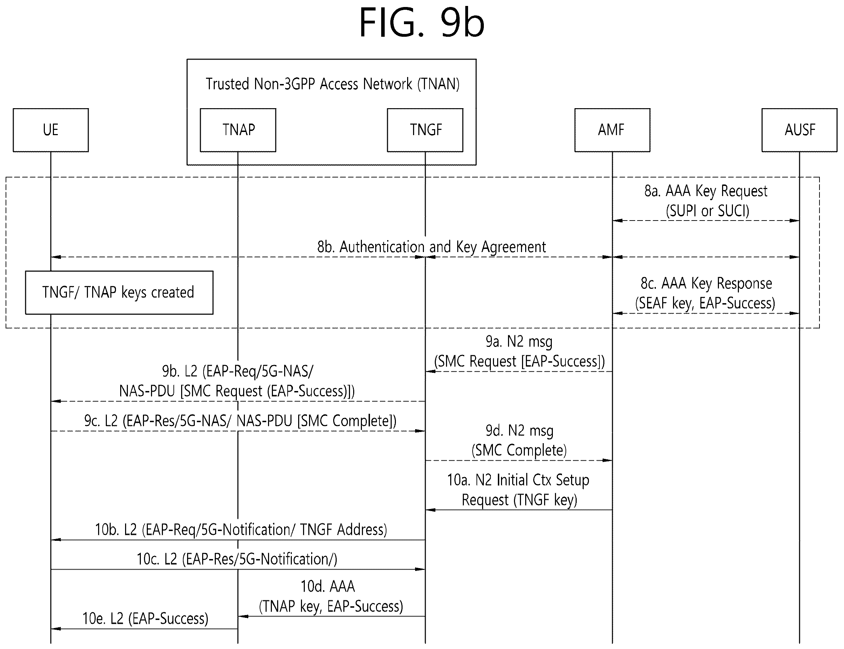

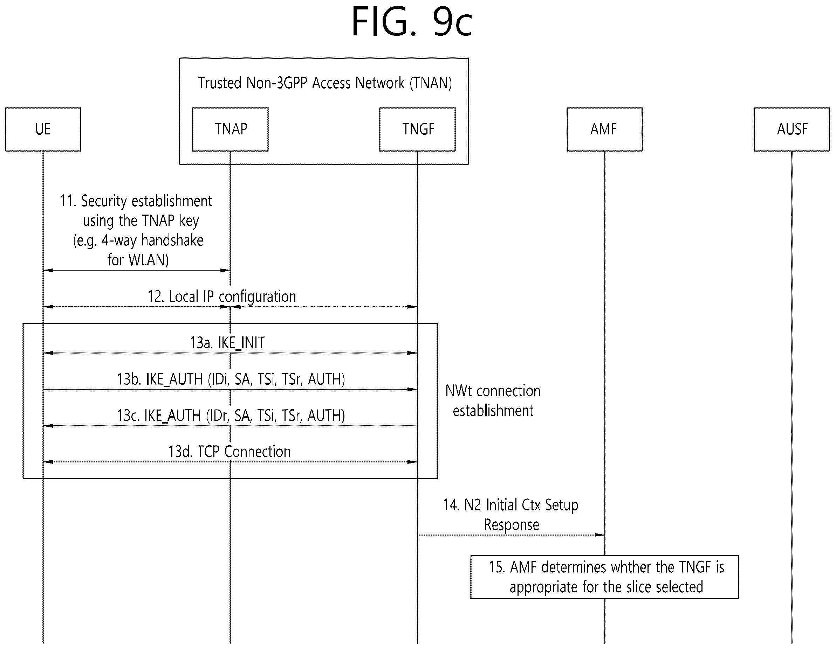

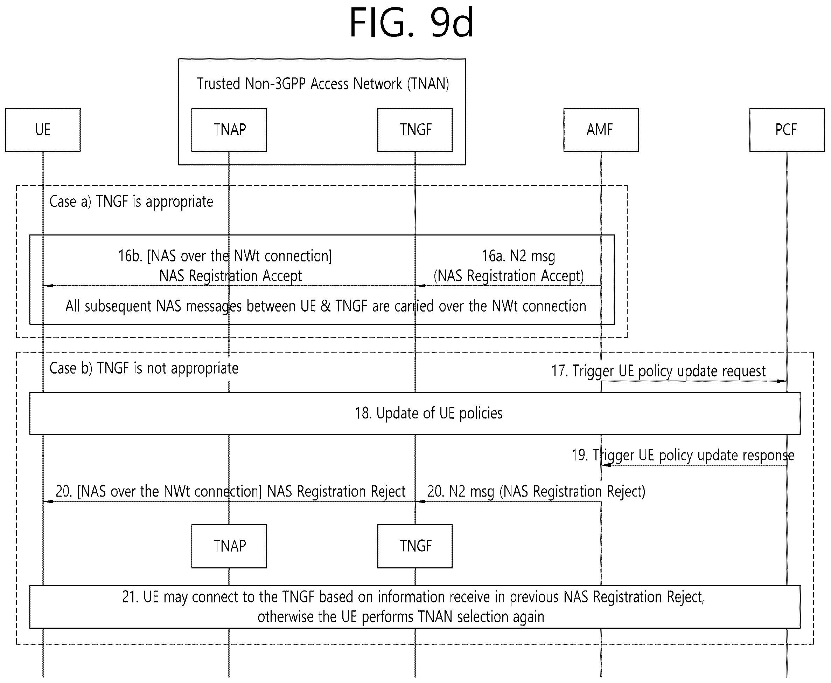

**FIG. 9a****,** **FIG. 9b****,** **FIG. 9c** **and** **FIG. 9d** **shows registration via trusted non-3GPP access according to embodiments of the present specification.**

The UE may connect to a trusted non-3GPP Access Network (TNAN) and it may also register to 5GC over via this TNAN, by using the EAP-based procedure shown in FIG. 9a, FIG. 9b, FIG. 9c and FIG. 9d. This procedure may be very similar with the 5GC registration procedure over untrusted non-3GPP access. The link between the UE and the TNAN may be any data link (L2) that supports EAP encapsulation, e.g. PPP, PANA, Ethernet, IEEE 802.3, IEEE 802.11, etc. The interface between the TNAP and TNGF is an AAA interface.

0. The UE which is not operating in SNPN access mode for Yt interface may select a PLMN and a TNAN for connecting to this PLMN by using the Trusted Non-3GPP Access Network selection procedure. During this procedure, the UE may discover the PLMNs with which the TNAN supports trusted connectivity (e.g. "5G connectivity").

The UE operating in SNPN access mode for Yt interface may select an SNPN and a TNAN for connecting to this SNPN by using the Trusted Non-3GPP Access Network selection procedure. During this procedure, the UE may discover the SNPNs with which the TNAN supports trusted connectivity (e.g. "5G connectivity").

NOTE 1: In this Release, when the trusted non-3GPP access is a trusted WLAN access, the UE may be configured (e.g. with the WLANSP rules) to select an TNAN(SSID and TNGF) associated with a non-3GPP TA(Tracking Area), which supports one or more of the UE's subscribed S-NSSAIs.
1. A layer-2 connection may be established between the UE and the TNAP. In the case of PPP, this step may correspond to a PPP LCP negotiation. In other types of non-3GPP access (e.g. Ethernet), this step may not be required.
2-3. An EAP procedure may be initiated. EAP messages may be encapsulated into layer-2 packets, e.g. into IEEE 802.3/802.1x packets, into IEEE 802.11/802.1x packets, into PPP packets, etc. The NAI provided by the UE not operating in SNPN access mode for Yt interface may indicate that the UE requests "5G connectivity" to a specific PLMN (e.g. NAI = "<any_username>@nai.5gc. mnc<MNC>.mcc<MCC>.3gppnetwork.org"). In the case of WLAN access, if the UE has an MPS subscription, the UE may also have to include an indication of its MPS subscription in the username part of the NAI. The NAI provided by the UE operating in SNPN access mode for Yt interface may indicate that the UE request "5G connectivity" to a specific SNPN (e.g. NAI = "<any_username>@nai.5gc. nid<NID>.mnc<MNC>.mcc<MCC>.3gppnetwork.org"). If the WLANSP rule contains information including TNGF ID to use for specific slices and the UE supports such information, the UE may build the realm of NAI taking the TNGF ID into account (e.g. NAI = "<any_username>@ tngfid<TNGF ID>. nai.5gc. mnc<MNC>.mcc<MCC>.3gppnetwork.org"). This NAI may trigger the TNAP to send an AAA request to a TNGF, which operates as an AAA proxy. Between the TNAP and TNGF, the EAP packets may be encapsulated into AAA messages. The AAA request may also include the TNAP identifier, which can be treated as the User Location Information.

NOTE 2: It is assumed that when the trusted non-3GPP access is a trusted WLAN access, the TNAP selects a TNGF based on the realm provided by the UE and also based on the SSID selected by the UE. In a deployment, a TNGF may be reached over different SSID(s) where the TNGF supports a Tracking Area and be associated with a set of slices, or an SSID may provide access to one or more TNGF(s), where each of these TNGF(s) may support a different Tracking Area and a different set of slices.

NOTE 3: Based on operator policy, after receiving the indication of MPS subscription from the UE, the TNAN may treat this UE with priority.

The terminal may transmit EAP signaling to the TNAN. The EAP signaling may include information about TNGF. The TNAN may select a TNGF based on the information about TNGF.

4-10. An EAP-5G may be executed for the untrusted non-3GPP access with the following modifications:
- The registration request may contain an indication that the UE supports TNGF selection based on the slices the UE wishes to use over trusted non-3GPP access (e.g. that the UE supports Extended WLANSP rule).
- A TNGF key (instead of an N3IWF key) may be created in the UE and in the AMF after the successful authentication. The TNGF key may be transferred from the AMF to TNGF in step 10a (within the N2 Initial Context Setup Request). The TNGF may derive a TNAP key, which is provided to the TNAP. The TNAP key may depend on the non-3GPP access technology.
- In step 5, the UE may have to include the Requested NSSAI in the AN parameters only if allowed, according to the conditions defined, for the trusted non-3GPP access. The UE may also have to include a UE Id in the AN parameters, e.g. a 5G-GUTI if available from a prior registration to the same PLMN or SNPN. If the UE in SNPN access mode for Yt interface performs the Registration procedure for UE onboarding, the UE may have to include an indication in the AN parameters that the connection request is for onboarding.
- In the N2 message sent in step 6b, the TNGF may include a UE Location Information (ULI) that contains a "null" IP address (e.g. 0.0.0.0) because the UE is not yet assigned an IP address. After the UE is assigned an IP address, the TNGF may include this address in subsequent N2 messages. This N2 message may also include the Selected PLMN ID and optionally the Selected NID, and the Establishment cause.

NOTE 4: The Selected NID may be present when the UE connects to an SNPN via Trusted non-3GPP access.
- If the UE in SNPN access mode for Yt interface performs the Registration procedure for UE onboarding, the interaction between AMF and AUSF (step 8a and step 8c) may be replaced, depending on the 5GC architecture that is used for UE onboarding.
- After receiving the TNGF key from AMF in step 10a, the TNGF may have to send to UE an EAP-Request/5G-Notification packet containing the "TNGF Contact Info", which includes the IP address of TNGF. After receiving an EAP-Response/5G-Notification packet from the UE in step 10c, the TNGF may have to send message 10d containing the EAP-Success packet.

11. The TNAP key may be used to establish layer-2 security between the UE and TNAP. A 4-way handshake may be executed, which establishes a security context between the WLAN AP and the UE that is used to protect unicast and multicast traffic over the air.

12. The UE may receive IP configuration from the TNAN, e.g. with DHCP.

13. At this point, the UE has successfully connected to the TNAN and has obtained IP configuration. The UE may set up a secure NWt connection with the TNGF as follows:

The UE may initiate an IKE_INIT exchange using the IP address of TNGF received during the EAP-5G signaling, in step 10b. Subsequently, the UE may initiate an IKE_AUTH exchange and may provide its identity. The identity provided by the UE in the IKEv2 signaling may have to be the same as the UE Id included in the AN parameters in step 5. This may enable the TNGF to locate the TNGF key that was created before for this UE, during the authentication in step 8. The TNGF key may be used for mutual authentication. NULL encryption may be negotiated between the UE and the TNGF.

In step 13c, the TNGF may provide to UE (a) an "inner" IP address, (b) a NAS_IP_ADDRESS and a TCP port number and (c) a DSCP value. After this step, an IPsec SA may be established between the UE and TNGF. This may be referred to as the "signaling IPsec SA" and may operate in Tunnel mode. Operation in Tunnel mode may enable the use of MOBIKE [40] for re-establishing the IPsec SAs when the IP address of the UE changes during mobility events. All IP packets exchanged between the UE and TNGF via the "signaling IPsec SA" may have to be marked with the above DSCP value. The UE and the TNAP may map the DSCP value to a QoS level (e.g. to an EDCA Access Class [48]) supported by the underlying non-3GPP Access Network. The mapping of a DSCP value to a QoS level of the non-3GPP Access Network may be outside the scope of 3GPP.

Right after the establishment of the "signaling IPsec SA", the UE may have to setup a TCP connection with the TNGF by using the NAS_IP_ADDRESS and the TCP port number received in step 13c. The UE may have to send NAS messages within TCP/IP packets with source address the "inner" IP address of the UE and destination address the NAS_IP_ADDRESS. The TNGF may have to send NAS messages within TCP/IP packets with source address the NAS_IP_ADDRESS and destination address the "inner" IP address of the UE.

This may conclude the setup of the NWt connection between the UE and the TNGF. All subsequent NAS messages between UE and TNGF may be carried over this NWt connection (e.g. encapsulated in TCP/IP/ESP).

14. After the NWt connection is successfully established, the TNGF may respond to AMF with an N2 Initial Context Setup Response message.

15. The AMF may determine the subset of the requested NSSAI that is allowed by the subscribed S-NSSAI(s); the AMF may detect that the TNGF used by the UE is not compatible with this subset and then proceed with steps 17-21. Otherwise, e.g. if the TNGF supports the subset of the requested NSSAI that is allowed by the subscribed S-NSSAI(s), the AMF may proceed with step 16 and steps 17-21 are skipped.

NOTE 5: The criteria for the AMF to determine that the TNGF used by the UE is not compatible with the subset of the requested NSSAI that is allowed by the subscribed S-NSSAI(s) is based on local AMF policies. For example the AMF can determine that the TNGF used by the UE is compatible as soon as there is one supported slice in common.

16. The NAS Registration Accept message may be sent by the AMF and may be forwarded to UE via the established NWt connection. Now the UE may use the TNAN (a) to transfer non-seamless offload traffic and (b) to establish one or more PDU Sessions.

Steps 17 to 21 may correspond to the case where the AMF has detected that TNGF used by the UE is not compatible with the subset of the requested NSSAI that is allowed by the subscribed S-NSSAI(s).

If the AMF detects that the UE keeps registering by using the same TNGF multiple times based on the AMF implementation, the AMF may accept UE registration and allow to use S-NSSAIs supported by the selected TNGF instead of rejecting the UE registration.

17. If the UE Registration Request contains an indication that the UE supports TNGF selection based on the slices the UE wishes to use over trusted non-3GPP access, the AMF may trigger the UE PCF to update the policies on the UE. The AMF may request the PCF to receive a notification when the PCF has completed the UE policy update.

Whether the PCF updates whole ANDSP or only updates WLANSP may be up to PCF decision considering allocated PSI and operator policy.

NOTE 6: The UE may be assumed to inform PCF whether the UE supports Extended WLANSP or ANDSP as part of the UE policy update procedure. Details will be specified by CT WG1.

18. The PCF may update the UE policy.

19. When the UE policy update is terminated, the PCF may notify the AMF.

20. The AMF may send, via the TNGF, a UE Registration Reject indicating that the selected TNGF was not appropriate for the requested slices that the UE is allowed to access to. The AMF may provide target TNAN information (SSID, TNGF ID) to the UE within the Registration Reject message indicating the UE to build the NAI based on the TNGF ID.

NOTE 7: The AMF may determine a target TNGF that supports the subset of the requested NSSAI that is allowed by the subscribed S-NSSAI(s) based on the list of supported TAs and the corresponding list of supported slices for each TA obtained in N2 interface management procedures.

21. If supported by the UE and if the UE received target TNAN information in step 20, the UE may connect to the target TNAN, otherwise the UE may perform TNAN selection again using the updated WLANSP rule received in step 18.

If the target TNAN information includes TNGF ID, the UE may build the NAI based on TNGF ID. The UE may use the target TNAN information in the Registration Reject only for the TNAN selection directly following the rejected registration and UE may not store it for future use. If the UE uses the target TNAN information when performing Registration, the UE may include the same Requested NSSAI with the one included in the previous Registration Request.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

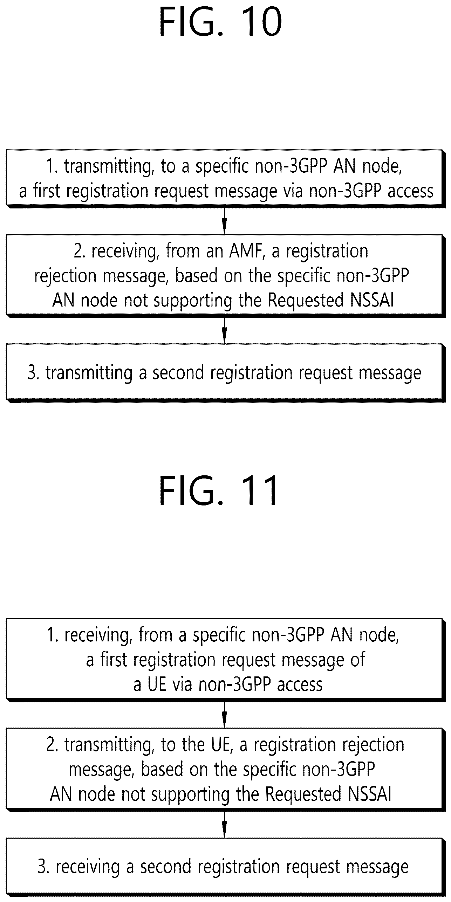

**FIG. 10** **shows the procedure of the UE according to disclosure of the present specification.**
1.The UE may transmit, to a specific non-3GPP AN (Access Network) node, a first registration request message via non-3GPP (non-Third Generation Partnership Project) access.
   The first registration request message may include Requested NSSAI (Network Slice Selection Assistance Information).
2. The UE may receive, from an AMF (Access and Mobility management Function), a registration rejection message, based on the specific non-3GPP AN node not supporting the Requested NSSAI.
   The registration rejection message may include information on a target non-3GPP AN node.
3. The UE may transmit a second registration request message.

Based on the step of transmitting the second registration request message being performed using the information on the target non-3GPP AN node, the second registration request message may include the Requested NSSAI.

The specific non-3GPP AN node may be N3IWF (Non-3GPP Interworking Function) or TNGF (Trusted Non-3GPP Gateway Function).

The second registration request message may be the first request for registration after receiving the registration rejection message.

The UE may selecting, based on the specific non-3GPP AN node being a N3IWF, the N3IWF.

The first registration request message may be transmitted, based on the selecting the N3IWF.

The UE may selecting a new N3IWF using the information on the target non-3GPP AN node, based on the specific non-3GPP AN node being a N3IWF.

The second registration request message may be transmitted, based on the selecting the new N3IWF.

The UE may selecting, based on the specific non-3GPP AN node being a TNGF, a first TNAN (Trusted Non-3GPP Access Network) including the TNGF.

The first registration request message may be transmitted, based on the selecting the first TNAN.

The UE may selecting a second TNAN using the information on the target non-3GPP AN node, based on the specific non-3GPP AN node being a TNGF.

The second registration request message may be transmitted, based on the selecting the second TNAN.

The second TNAN may be identical to the first TNAN.

The UE may selecting, based on the specific non-3GPP AN node being a TNGF, an EAP signaling including information on the TNGF to a first TNAN.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

**FIG. 11** **shows the procedure of the AMF according to disclosure of the present specification.**
1. The AMF may receive, from a specific non-3GPP AN (Access Network) node, a first registration request message of a UE (User Equipment) via non-3GPP (non-Third Generation Partnership Project) access.
   The first registration request message may include Requested NSSAI (Network Slice Selection Assistance Information).
2. The AMF may transmit, to the UE, a registration rejection message, based on the specific non-3GPP AN node not supporting the Requested NSSAI.
   The registration rejection message may include information on a target non-3GPP AN node.
3. The AMF may receive a second registration request message.

Based on the UE transmitting the second registration request message using the information on the target non-3GPP AN node, the second registration request message may include the Requested NSSAI.

The specific non-3GPP AN node may be N3IWF (Non-3GPP Interworking Function) or TNGF (Trusted Non-3GPP Gateway Function).

The second registration request message may be the first request received from the UE for registration after transmitting the registration rejection message.

Based on the specific non-3GPP AN node being a N3IWF, the N3IWF may be determined by selection of the UE.

Based on the specific non-3GPP AN node being a N3IWF, the UE may select a new N3IWF using the information on the target non-3GPP AN node.

The second registration request message may be received from the new N3IWF.

Based on the specific non-3GPP AN node being a TNGF, a first TNAN (Trusted Non-3GPP Access Network) including the TNGF may be determined by selection of the UE.

Based on the specific non-3GPP AN node being a TNGF, the UE may select a second TNAN using the information on the target non-3GPP AN node.
wherein the second registration request message is received from the second TNAN.

The second TNAN may be identical to the first TNAN.

The AMF may determine that UE uses a non-3GPP AN node other than the specific non-3GPP AN node, based on the specific non-3GPP AN node not supporting the Requested NSSAI.

The registration reject message may be based on the determination.

Hereinafter, an apparatus for performing communication according to some embodiments of the present specification will be described.

For example, a target V-SMF may include a processor, a transceiver, and a memory.

For example, a processor may be configured to be operably coupled with a memory and a processor.

The processor may perform: transmitting, to a specific non-3GPP AN (Access Network) node, a first registration request message via non-3GPP (non-Third Generation Partnership Project) access; wherein the first registration request message includes Requested NSSAI (Network Slice Selection Assistance Information), receiving, from an AMF (Access and Mobility management Function), a registration rejection message, based on the specific non-3GPP AN node not supporting the Requested NSSAI; wherein the registration rejection message includes information on a target non-3GPP AN node, transmitting a second registration request message, wherein, based on the step of transmitting the second registration request message being performed using the information on the target non-3GPP AN node, the second registration request message includes the Requested NSSAI.

Hereinafter, a processor for providing communication according to some embodiments of the present specification will be described.

The processor is configured to: transmitting, to a specific non-3GPP AN (Access Network) node, a first registration request message via non-3GPP (non-Third Generation Partnership Project) access; wherein the first registration request message includes Requested NSSAI (Network Slice Selection Assistance Information), receiving, from an AMF (Access and Mobility management Function), a registration rejection message, based on the specific non-3GPP AN node not supporting the Requested NSSAI; wherein the registration rejection message includes information on a target non-3GPP AN node, transmitting a second registration request message, wherein, based on the step of transmitting the second registration request message being performed using the information on the target non-3GPP AN node, the second registration request message includes the Requested NSSAI.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: transmitting, to a specific non-3GPP AN (Access Network) node, a first registration request message via non-3GPP (non-Third Generation Partnership Project) access; wherein the first registration request message includes Requested NSSAI (Network Slice Selection Assistance Information), receiving, from an AMF (Access and Mobility management Function), a registration rejection message, based on the specific non-3GPP AN node not supporting the Requested NSSAI; wherein the registration rejection message includes information on a target non-3GPP AN node, transmitting a second registration request message, wherein, based on the step of transmitting the second registration request message being performed using the information on the target non-3GPP AN node, the second registration request message includes the Requested NSSAI.

The present specification may have various effects.

For example, it can solve a problem where a terminal's registration request is repeatedly rejected when the terminal attempts to register.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a UE (User Equipment), comprising:
transmitting, to a specific non-3GPP AN (Access Network) node, a first registration request message via non-3GPP (non-Third Generation Partnership Project) access;
wherein the first registration request message includes Requested NSSAI (Network Slice Selection Assistance Information),
receiving, from an AMF (Access and Mobility management Function), a registration rejection message, based on the specific non-3GPP AN node not supporting the Requested NSSAI;
wherein the registration rejection message includes information on a target non-3GPP AN node,
transmitting a second registration request message,
wherein, based on the step of transmitting the second registration request message being performed using the information on the target non-3GPP AN node, the second registration request message includes the Requested NSSAI.

2. The method of claim 1,
wherein the specific non-3GPP AN node is N3IWF (Non-3GPP Interworking Function) or TNGF (Trusted Non-3GPP Gateway Function).

3. The method of claim 1 or claim 2,
wherein the second registration request message is the first request for registration after receiving the registration rejection message.

4. The method of one of the claims 1 to 3, further comprising:
selecting, based on the specific non-3GPP AN node being a N3IWF, the N3IWF;
wherein the first registration request message is transmitted, based on the selecting the N3IWF.

5. The method of one of the claims 1 to 3, further comprising:
selecting a new N3IWF using the information on the target non-3GPP AN node, based on the specific non-3GPP AN node being a N3IWF,
wherein the second registration request message is transmitted, based on the selecting the new N3IWF.

6. The method of one of the claims 1 to 3, further comprising:
selecting, based on the specific non-3GPP AN node being a TNGF, a first TNAN (Trusted Non-3GPP Access Network) including the TNGF;
wherein the first registration request message is transmitted, based on the selecting the first TNAN.

7. The method of one of the claims 1 to 3, further comprising:
selecting a second TNAN using the information on the target non-3GPP AN node, based on the specific non-3GPP AN node being a TNGF,
wherein the second registration request message is transmitted, based on the selecting the second TNAN.

8. The method of claim 7,
wherein the second TNAN is identical to the first TNAN.

9. The method of one of the claims 1 to 3, further comprising:
selecting, based on the specific non-3GPP AN node being a TNGF, an EAP signaling including information on the TNGF to a first TNAN.

10. A method for performing communication, performed by an AMF (Access and Mobility management Function), comprising:
receiving, from a specific non-3GPP AN (Access Network) node, a first registration request message of a UE (User Equipment) via non-3GPP (non-Third Generation Partnership Project) access;
wherein the first registration request message includes Requested NSSAI (Network Slice Selection Assistance Information),
transmitting, to the UE, a registration rejection message, based on the specific non-3GPP AN node not supporting the Requested NSSAI;
wherein the registration rejection message includes information on a target non-3GPP AN node,
receiving a second registration request message,
wherein, based on the UE transmitting the second registration request message using the information on the target non-3GPP AN node, the second registration request message includes the Requested NSSAI.

11. The method of claim 10,
wherein the specific non-3GPP AN node is N3IWF (Non-3GPP Interworking Function) or TNGF (Trusted Non-3GPP Gateway Function).

12. The method of claim 10 or claim 11,
wherein the second registration request message is the first request received from the UE for registration after transmitting the registration rejection message.

13. The method of one of the claims 10 to 12,
wherein, based on the specific non-3GPP AN node being a N3IWF, the N3IWF is determined by selection of the UE.

14. The method of one of the claims 10 to 12,
wherein, based on the specific non-3GPP AN node being a N3IWF, the UE selects a new N3IWF using the information on the target non-3GPP AN node,
wherein the second registration request message is received from the new N3IWF.

15. The method of one of the claims 10 to 12,
wherein, based on the specific non-3GPP AN node being a TNGF, a first TNAN (Trusted Non-3GPP Access Network) including the TNGF is determined by selection of the UE.

16. The method of one of the claims 10 to 12,
wherein, based on the specific non-3GPP AN node being a TNGF, the UE selects a second TNAN using the information on the target non-3GPP AN node,
wherein the second registration request message is received from the second TNAN.

17. The method of claim 16,
wherein the second TNAN is identical to the first TNAN.

18. The method of one of the claims 10 to 17, further comprising:
determining that UE uses a non-3GPP AN node other than the specific non-3GPP AN node, based on the specific non-3GPP AN node not supporting the Requested NSSAI,
wherein the registration reject message is based on the determination.

19. A UE (User Equipment), to perform communication, comprising:
a transceiver; and
a processor,
wherein the processor performs operation that is a method of one of the claims 1 to 9.

20. An AMF (Access and Mobility management Function), to perform communication, comprising:
a transceiver; and
a processor,
wherein the processor performs operation that is a method of one of the claims 10 to 18.

21. An apparatus in mobile communication, comprising:
at least one processor; and
at least one memory storing instructions and operably electrically connectable with the at least one processor,
wherein, based on the instructions being operated by the at least one processor, the instructions perform operation that is a method of one of the claims 1 to 9.

22. A non-volatile computer readable storage medium having recorded instructions,
wherein the instructions, based on being executed by one or more processors, cause the one or more processors to perform operation that is a method of one of the claims 1 to 9.
